# EUROPÄISCHE PATENTSCHRIFT

(11) **EP 3 713 781 B1**
(45) Veröffentlichungstag und Bekanntmachung des Hinweises auf die Patenterteilung: **06.03.2024**
(21) Anmeldenummer: 18814792.0
(22) Anmeldetag: 22.11.2018
(51) Int. Cl.: B60D 1/62, B60D 1/01, B62D 53/08, B62D 15/02, B60T 17/00

(54) **SENSORVORRICHTUNG FÜR EINE ZUGFAHRZEUGKUPPLUNG**
SENSOR DEVICE FOR A TOWING VEHICLE COUPLING
DISPOSITIF DE DÉTECTION POUR SYSTÈME D'ATTELAGE DE VÉHICULE TRACTEUR

(30) Priorität: 23.11.2017 DE 102017127743; 04.07.2018 DE 102018116189
(43) Veröffentlichungstag der Anmeldung: 30.09.2020
(73) Patentinhaber: WESTFALIA - Automotive GmbH, 33378 Rheda-Wiedenbrück (DE)
(72) Erfinder: SIELHORST, Bernhard, 33378 Rheda-Wiedenbrück (DE); RÖRING, Stefan, 33602 Bielefeld (DE)
(74) Vertreter: Patentanwälte Bregenzer und Reule Partnerschaftsgesellschaft mbB
(86) Internationale Anmeldenummer: PCT/EP2018/082193
(87) Internationale Veröffentlichungsnummer: WO 2019/101847

(56) Entgegenhaltungen:
- WO-A1-2005/028220
- DE-A1- 19 964 045
- GB-A- 2 470 610
- US-A- 5 152 544

## Beschreibung

Die Erfindung betrifft eine Sensorvorrichtung für eine Zugfahrzeugkupplung oder als Bestandteil einer Zugfahrzeugkupplung, insbesondere einer Sattelkupplung, gemäß dem Oberbegriff des Anspruchs 1.

Eine derartige Sensorvorrichtung ist beispielsweise in WO 2005/028220 A1 beschrieben.

Der Sattelzapfen wird auch als Königszapfen (englisch: Kingpin) bezeichnet. Wenn das Kuppelgegenelement an das Kuppelelement und mithin die Zugfahrzeugkupplung angekuppelt ist, kann das Kuppelgegenelement und somit das Anhängerfahrzeug um die mindestens eine Gelenk-Drehachse drehen oder schwenken.

Aus DE 199 640 45 A1 sind beispielsweise eine Sensorvorrichtung sowie eine entsprechende Zugfahrzeugkupplung bekannt. Problematisch ist jedoch, dass die Sensorvorrichtung und der Mitnehmer im Außenbereich angeordnet sind und Umwelteinflüssen ausgesetzt sind.

Es ist daher die Aufgabe der vorliegenden Erfindung, eine verbesserte Sensorvorrichtung für eine Zugfahrzeugkupplung der eingangs genannten Art bereitzustellen.

Zur Lösung der Aufgabe ist eine Sensorvorrichtung gemäß der technischen Lehre des Anspruchs 1 vorgesehen. Zur Lösung der Aufgabe ist ferner eine Zugfahrzeugkupplung mit einer derartigen Sensorvorrichtung vorgesehen.

Ein Grundgedanke dabei ist es, das die Sensorvorrichtung im Außenraum, d.h. direkt an der Kupplungsaufnahme oder dem Kupplungsmaul angeordnet ist, wobei der Mitnehmer gleichzeitig den Sensor schützt. Der Sensor ist beispielsweise im Innenraum des Mitnehmers angeordnet oder in einem Schutzgehäuse, welches durch den Mitnehmer gebildet ist.

Der Lagerkörper ist vorteilhaft verdrehfest bezüglich der Mitnahme-Drehachse anhand einer Verdrehsicherung an einer Halteeinrichtung, die zum Halten der Sensorvorrichtung an der Zugfahrzeugkupplung vorgesehen ist, gehalten.

Weiterhin ist der Mitnehmer nicht direkt im Lagerbereich angeordnet, sodass eine Nachrüstung einer vorhandenen Zugfahrzeugkupplung leichter ist. Der Lagerbereich ist im Kraftfluss zwischen Zugfahrzeug und Anhängerfahrzeug und mechanisch stark belastet und wird durch den Mitnehmer nicht geschwächt. Ein Aufnahmeraum oder Bauraum für den Mitnehmer ist nicht notwendig.

Das Kuppelelement weist vorteilhaft eine Kupplungsaufnahme, insbesondere ein Kupplungsmaul, zur Aufnahme eines Sattelzapfens des Kuppelgegenelements auf.

Eine bevorzugte Ausführungsform der Erfindung oder an sich eigenständige Erfindung, bei der der Mitnehmer auch im Lagerbereich zwischen Kuppelelement und Kuppelgegenelement angeordnet sein kann, lässt sich im Zusammenhang mit einer sogenannten Sattelkupplung wie folgt definieren:
Sensorvorrichtung für eine Zugfahrzeugkupplung oder als Bestandteil einer Zugfahrzeugkupplung, wobei die Zugfahrzeugkupplung als eine Sattelkupplung ausgestaltet ist, mit der ein Anhängerfahrzeug in Gestalt eines Sattelaufliegers an ein Zugfahrzeug in Gestalt eines Lastkraftwagens ankuppelbar ist, wobei die Zugfahrzeugkupplung ein Kuppelelement zur lösbaren Kupplung eines Kuppelgegenelements aufweist, wobei das Kuppelelement an dem Zugfahrzeug und das Kuppelgegenelement an dem Anhängerfahrzeug befestigt oder befestigbar sind und im aneinander gekuppelten Zustand ein Gelenk bildend um mindestens eine Gelenk-Drehachse relativ zueinander drehbar sind, wobei das Kuppelelement eine Kupplungsaufnahme, insbesondere ein Kupplungsmaul, zur Aufnahme eines Sattelzapfens des Kuppelgegenelements aufweist, wobei die Sensorvorrichtung einen an einem Lagerkörper um eine Mitnahme-Drehachse drehbar gelagerten Mitnehmer zur Erfassung einer Drehung des Kuppelgegenelements relativ zu dem Kuppelelement um die mindestens eine Gelenk-Drehachse aufweist, wobei der Mitnehmer von dem Sattelzapfen bei einer Drehung um die mindestens eine Gelenk-Drehachse um die Mitnahme-Drehachse dreh-mitnehmbar ist und die Sensorvorrichtung mindestens einen Sensor zur Erfassung einer jeweiligen Drehposition des Mitnehmers relativ zu dem Lagerkörper bezüglich der Mitnahme-Drehachse aufweist, dadurch gekennzeichnet, dass der mindestens eine Sensor in einem Innenraum des Mitnehmers angeordnet ist und/oder dass der Mitnehmer ein Schutzgehäuse für den mindestens einen Sensor bildet. In diesem Fall kann der Mitnehmer auch im Lagerbereich zwischen Kuppelelement und Kuppelgegenelement angeordnet sein.

Ein bevorzugtes Konzept sieht dabei vor, dass der Sensor sozusagen vollständig gekapselt oder geschützt in dem Schutzgehäuse bzw. dem Mitnehmer angeordnet ist.

Der Mitnehmer ist vorteilhaft in der Art einer Schutzkappe oder Schutzabdeckung ausgestaltet. Der Mitnehmer kann beispielsweise eine Art Abdeckhaube oder Abdeckkappe bilden, in deren Innenraum der mindestens eine Sensor, vorzugsweise eine Sensorvorrichtung, angeordnet ist.

Es ist vorteilhaft, dass am Sattelzapfen oder jedenfalls der Kupplung des Sattelaufliegers keine besonderen Maßnahmen notwendig sind. Vielmehr ist der Mitnehmer der erfindungsgemäßen Sensorvorrichtung zur Drehmitnahme oder Drehkoppelung mit dem Sattelzapfen ausgestaltet und vorgesehen. Der Lagerkörper ist beispielsweise an dem Kuppelelement des Zugfahrzeugs angeordnet oder anordenbar. Der Lagerkörper kann aber auch am Kuppelelement angeordnet sein oder durch einen Abschnitt des Kuppelelements gebildet sein. So kann beispielsweise an dem Kuppelelement der Zugfahrzeugkupplung oder Sattelkupplung eine Lagernut oder ein Lagervorsprung angeordnet sein, an welchem der Mitnehmer gelagert ist.

Besonders bevorzugt ist jedoch eine Ausführungsform, bei der der Lagerkörper als ein von dem Kuppelelement separater Körper ausgestaltet ist.

Der Mitnehmer ist bezüglich des Kuppelelementes zur Bereitstellung der Aufrechterhaltung oder Mitnahmekopplung zu dem Kuppelelement vorzugsweise um mindestens einen von der Drehbarkeit um die Mitnahme-Drehachse verschiedenen Bewegungsfreiheitsgrad, beispielsweise einen Drehfreiheitsgrad, Schiebe-Freiheitsgrad oder dergleichen, beweglich gelagert. Somit kann also der Mitnehmer leichter in Mitnahmekopplung mit dem Kuppelgegenelement oder dem Sattelzapfen gehalten werden.

Eine bevorzugte Ausführungsform sieht vor, dass die Sensorvorrichtung zu einer Anordnung in einem bei der Kupplungsaufnahme, beispielsweise dem Kupplungsmaul, vorhandenen Aufnahmeraum der Zugfahrzeugkupplung ausgestaltet und/oder vorgesehen ist. Vorteilhaft ist eine geometrische Ausgestaltung der Sensorvorrichtung derart, dass sie in dem Aufnahmeraum angeordnet sein kann. Der Aufnahmeraum befindet sich beispielsweise unterhalb der Kupplungsaufnahme oder neben einer Stützplatte der Zugfahrzeugkupplung. Der Aufnahmeraum kann beispielsweise als eine Kavität, Aussparung oder dergleichen ausgestaltet sein. Bevorzugt ist es, wenn der Aufnahmeraum sozusagen ohnehin vorhanden ist, d.h., dass eine an sich vorhandene Zugfahrzeugkupplung mit der Sensorvorrichtung nachgerüstet werden kann.

Erfindungsgemäß ist vorgesehen, dass der Mitnehmer bezüglich des Kuppelelements zur Bereitstellung oder Aufrechterhaltung einer Mitnahmekopplung zu dem Kuppelgegenelement mit mindestens einem von der Drehbarkeit um die Mitnahme-Drehachse verschiedenen Bewegungsfreiheitsgrad, insbesondere mindestens einem Drehfreiheitsgrad, beweglich gelagert ist.

Vorteilhaft ist vorgesehen, dass der mindestens eine von der Drehbarkeit um die Mitnahme-Drehachse verschiedene Bewegungsfreiheitsgrad mindestens einen Drehfreiheitsgrad und/oder mindestens einen linearen Bewegungsfreiheitsgrad oder Verschiebe-Freiheitsgrad umfasst.

Vorteilhaft ist es, wenn eine Verschiebeachse des Verschiebe-Freiheitsgrads und eine Schwenkachse des mindestens einen Drehfreiheitsgrads einander schneiden.

Es ist eine Grundgedanke dabei, dass der Mitnehmer nicht nur um die Mitnahme-Drehachse drehbar bezüglich des Kuppelelementes gelagert ist, sondern auch mit einem oder mehreren weiteren Bewegungsfreiheitsgraden, die sich von der Drehbarkeit um die Mitnahme-Drehachse bzw. dem Drehfreiheitsgrad um die Mitnahme-Drehachse unterscheiden. Dadurch kann der Mitnehmer sozusagen schwimmend in Anlage oder Mitnahmekopplung zu dem Kuppelgegenelement, beispielsweise einer Zugkugelkupplung, gebracht werden.

Der mindestens eine Bewegungsfreiheitsgrad zur Bereitstellung der Mitnahmekopplung oder Aufrechterhaltung derselben weist zweckmäßigerweise mindestens einen linearen Bewegungsfreiheitsgrad auf. Somit kann also beispielsweise der Mitnehmer bezüglich oder parallel zu der Mitnahme-Drehachse zu dem Kuppelgegenelement hin oder von diesem weg beweglich an dem Kuppelelement oder bezüglich des Kuppelelementes gelagert sein. Die Verschiebeachse verläuft zweckmäßigerweise parallel oder in einem Winkel von weniger als 90° zu der Mitnahme-Drehachse. Die lineare Verstellachse kann zudem im Rahmen des mindestens einen Drehfreiheitsgrads um eine Drehachse oder Schwenkachse schwenkbar sein.

Vorzugsweise ist vorgesehen, dass der Mitnehmer bezüglich des Kuppelelementes entlang mindestens einer Verschiebeachse oder Linearachse verschieblich gelagert ist, beispielweise entlang einer Linearachse oder Verschiebeachse, die zu der Mitnahme-Drehachse koaxial oder parallel ist.

Wenn der Mitnehmer zusätzlich zu der Drehbarkeit um die Mitnahme-Drehachse ausschließlich entlang einer Linearachse oder Verschiebeachse verschieblich gelagert ist, ist vorzugsweise vorgesehen, dass er eine Aufgleitschräge und/oder mindestens eine federnde oder elastische Komponente aufweist. Der Mitnehmer kann dann beispielsweise bei einem Ankuppeln des Kuppelgegenelements an das Kuppelelement entlang der Linearachse oder Verschiebeachse ausweichen und zudem noch quer zu der Linearachse oder Verschiebeachse nachgeben, um dem Kuppelgegenelement eine Bewegung in Kontakt mit dem Mitnehmer zu ermöglichen oder zu erleichtern, so dass der Mitnehmer und das Kuppelgegenelement in Mitnahmekontakt sind oder gelangen.

Vorteilhaft ist ferner, wenn der Mitnehmer mindestens eine außerhalb des Gelenks liegende Mitnahmefläche, insbesondere eine Reibschlussfläche, Formschlussfläche oder dergleichen, zur Mitnahme durch das Kuppelgegenelement aufweist. Beispielsweise ist die Mitnahmefläche außerhalb von Gelenkflächen des Kuppelelements und des Kuppelgegenelements angeordnet, mit denen das Kuppelelement und das Kuppelgegenelement aneinander entlang gleiten. Die Mitnahmefläche ist ferner vorteilhaft neben dem Kuppelelement und/oder Kuppelgegenelement angeordnet.

Der den Mitnehmer um die Mitnahme-Drehachse lagernde Lagerkörper ist beispielsweise an nur einer einzigen Lagerstelle an einer bezüglich der Zugfahrzeugkupplung ortsfesten Komponente, beispielsweise einem Stützkörper der Zugfahrzeugkupplung, bezüglich des mindestens einen Bewegungsfreiheitsgrades beweglich gelagert, beispielsweise um eine Verschiebeachse verschieblich und/oder um mindestens eine Schwenkachse oder Drehachse schwenkbar oder drehbar. Diese Lagerstelle kann in der Achslinie der Mitnahme-Drehachse liegen oder koaxial zu derselben sein. Beispielsweise kann die Verschiebeachse koaxial zur Mitnahme-Drehachse sein. Es ist aber auch möglich, dass diese einzige Lagerstelle exzentrisch zur Mitnahme-Drehachse ist. So kann beispielsweise ein Lagerarm, vor den der Lagerkörper vorsteht, an einer zu der Mitnahme-Drehachse exzentrischen Stelle der Zugfahrzeugkupplung gelagert sein.

Es ist aber auch möglich, dass der den Mitnehmer lagernden Lagerkörper an mindestens zwei, vorzugsweise mindestens drei oder vier Lagerstellen an einer bezüglich der Zugfahrzeugkupplung ortsfesten Komponente in Bezug auf den mindestens einen Bewegungsfreiheitsgrad beweglich gelagert ist. An den Lagerstellen können beispielsweise Schwenklager und/oder Schiebelager vorgesehen sein. Beispielsweise sind die Lagerstellen in Eckbereichen Polygons, insbesondere eines Dreiecks oder Viereckes, vorgesehen, zwischen denen der Lagerkörper angeordnet ist.

Der Sensor ist beispielsweise ein magnetischer Sensor, ein Hall-Sensor oder dergleichen. Es kann sich bei dem Sensor aber auch um einen optischen Sensor, kapazitiven Sensor, induktiven Sensor oder dergleichen handeln. Kombinationen verschiedener und/oder physikalisch verschieden erfassender Sensoren sind möglich.

Der Mitnehmer kann an dem Kuppelelement direkt gelagert sein. Beispielsweise ist an dem Kuppelelement eine Lageraufnahme für den Mitnehmer, insbesondere eine Lagernut, vorgesehen. Es ist möglich, dass das Kuppelelement den Lagerkörper bildet oder der Mitnehmer unmittelbar am Kuppelelement gelagert ist.

Der Mitnehmer kann aber auch an einem Kupplungsträger, beispielsweise einem Kupplungsarm, an dem das Kuppelelement angeordnet ist, gelagert sein. Der Kupplungsträger bildet dann den Lagerkörper oder trägt den Lagerkörper.

Bevorzugt ist es jedoch, wenn der Mitnehmer an einem vom dem Kuppelelement separaten Lagerkörper um die Mitnahme-Drehachse drehgelagert ist oder der Lagerkörper von dem Kuppelelement separat ist. Der Lagerkörper eignet sich beispielsweise zur nachträglichen Ausrüstung einer an sich vorhandenen Anhängekupplung oder Zugfahrzeugkupplung.

Das Kuppelelement umfasst beispielsweise eine Kupplungskugel, eine Kupplungsaufnahme oder dergleichen oder ist dadurch gebildet. An die Kupplungskugel oder an ein sonstiges positives Formschlusselement kann beispielsweise eine Anhängerkupplung eines Anhängers angehängt werden. Die Kupplungsaufnahme, beispielsweise ein Kupplungsmaul, eignet sich zur Aufnahme positiven Formschlusselements der Anhängerkupplung des Anhängers oder eines Sattelaufliegers, beispielsweise eines sogenannten Königszapfens.

Zur Lagerung des Mitnehmers bezüglich des von der Drehbarkeit um die Mitnahme-Drehachse verschiedenen Bewegungsfreiheitsgrads ist vorteilhaft eine Lagereinrichtung vorgesehen. Die Lagereinrichtung kann beispielsweise den Lagerkörper beweglich lagern, an dem der Mitnehmer um die Mitnahme-Drehachse drehgelagert ist. Die Lagereinrichtung ist beispielsweise ortsfest an der Zugfahrzeugkupplung angeordnet. Lagerflächen der Lagereinrichtung sind vorteilhaft stets in der Art von Lagerflächen oder Kontaktflächen eines Gleitlagers oder Wälzlagers in Kontakt miteinander.

Die Lagereinrichtung umfasst vorteilhaft mindestens ein Schiebelager und/oder ein Schwenklager. Bevorzugt ist eine Konfiguration, bei der ein Schiebelager in ein Schwenklager integriert ist, d. h. dass beispielsweise ein Schiebe-Lagerelement schiebebeweglich in einem Schwenk-Lagerelement aufgenommen ist, welches seinerseits schwenkbar an einer Schwenklageraufnahme gelagert ist. Die Schwenklageraufnahme kann ortsfest bezüglich des Kuppelelements sein. Es ist aber auch möglich, dass das Schiebe-Lagerelement bezüglich des Kuppelelements ortsfest ist und die Schwenklageraufnahme an einem Körper angeordnet ist, an dem der Mitnehmer um die Mitnahme-Drehachse drehbar gelagert ist, beispielsweise einem Träger einer noch zu beschreibenden Halteeinrichtung, dem Lagerkörper oder dergleichen.

Ein Schiebelagerkörper der Lagereinrichtung ist vorzugsweise anhand eines Elastomerkörpers an einer ortsfesten Komponente der Zugfahrzeugkupplung festgelegt, sodass der Schiebelagerkörper in mindestens einer Richtung quer zu seiner Schiebeachse bezüglich der ortsfesten Komponente auslenkbar ist. Der Schiebelagerkörper umfasst beispielsweise eine Lageraufnahme, einen Lagerachskörper oder dergleichen, an dem ein weiterer Lagerkörper bezüglich der Schiebeachse längsverschieblich gelagert ist. Somit kann die Schiebeachse bezüglich der ortsfesten Komponente der Zugfahrzeugkupplung kippen oder schwenken, vorzugsweise für einen Toleranzausgleich.

Es ist möglich, dass der Mitnehmer an einem Kupplungsträger oder Kupplungsarm, an dem das Kuppelelement angeordnet ist, gelagert ist. Der Kupplungsträger weist beispielsweise eine Lageraufnahme oder eine sonstige Lagerkontur für den Mitnehmer auf. Der Kupplungsträger bildet also den Lagerkörper oder trägt den Lagerkörper.

Ein bevorzugtes Ausführungsbeispiel sieht vor, dass das Kuppelelement eine Kupplungskugel ist und das Kuppelgegenelement eine Kupplungsaufnahme einer Zugkupplung eines Anhängers ist. Das als Kupplungskugel ausgestaltete Kuppelelement steht zweckmäßigerweise vor einen Kupplungsarm vor oder ist an einem freien Endbereich eines Kupplungsarmes angeordnet.

Es ist aber auch möglich, dass die Sensorvorrichtung an einer sogenannten Sattelkupplung angeordnet oder anordenbar ist, bei der das Kuppelelement eine Kupplungsaufnahme, zum Beispiel ein Kupplungsmaul zur Aufnahme eines Sattelzapfens des Kuppelgegenelementes, aufweist. Mithin ist also in diesem Fall die Aufnahme am Zugfahrzeug vorgesehen, während das in die Aufnahme eingreifende Bauteil am Anhängerfahrzeug vorhanden ist.

Der Lagerkörper ist zweckmäßigerweise ringförmig oder weist Ringabschnitte auf. Der Lagerkörper kann beispielsweise am Außenumfang eines Kupplungsarmes angeordnet sein oder auch am Innenumfang einer Kupplungsaufnahme.

Weiterhin ist es möglich, dass der Lagerkörper eine Aussparung oder Durchtrittsöffnung für mindestens einen Kuppelelement-Träger der Zugfahrzeugkupplung, beispielsweise den Kupplungsarm, aufweist. Der Lagerkörper kann auch mehrteilig sein, d.h., dass er Lagerkörperabschnitte aufweist, um den Mitnehmer zu lagern. Mithin kann also der Mitnehmer an mehreren Lagerkörperteilen oder Lagerkörperabschnitten oder mehreren Lagerkörpern gelagert sein.

Ferner ist es möglich, dass der Lagerkörper eine Lagerwelle oder einen Lagerzapfen umfasst.

Weiterhin zweckmäßig ist eine Halteeinrichtung zum Halten des Mitnehmers an einer Stirnseite des Kuppelgegenelements, insbesondere des Sattelzapfens. Die Halteeinrichtung oder eine Halteeinrichtung kann aber auch zur Befestigung an einander entgegengesetzten Seiten der Kupplungsaufnahme vorgesehen sein. Beispielsweise wird die Kupplungsaufnahme von seitlichen Abschnitten des Kuppelelementes begrenzt. An diesen seitlichen Abschnitten kann die Halteeinrichtung fest angeordnet sein oder beweglich gelagert sein. So können beispielsweise Schrauben oder dergleichen andere Befestigungsmittel dafür vorgesehen sein, die Halteeinrichtung an dem Kuppelelement zu befestigen.

Es ist möglich, dass die Halteeinrichtung einen Haltekörper, insbesondere eine Halteplatte, aufweist, der sich unterhalb des Aufnahmeraumes oder der Kupplungsaufnahme erstreckt und diese sozusagen von unten her zumindest teilweise in der Art eines Deckels verschließt.

Der Mitnehmer weist vorzugsweise Mittel für einen reibschlüssigen und/oder kraftschlüssigen und/oder magnetisch anhaftenden Halt an dem Kuppelgegenelement auf.

Vorteilhaft ist vorgesehen, dass das Kuppelgegenelement relativ zum Kuppelelement um die Mitnahme-Drehachse um einen Schwenkwinkel von mindestens 140°, vorzugsweise 160° oder weiter bevorzugt mindestens 180° oder mindestens 220° schwenken kann.

Der mindestens eine Bewegungsfreiheitsgrad des Mitnehmers zur Bereitstellung oder Aufrechterhaltung der Mitnahmekopplung zu dem Kuppelgegenelement umfasst zweckmäßigerweise mindestens einen Drehfreiheitsgrad zur Drehung des Mitnehmers um mindestens eine zu der Mitnahme-Drehachse winkelige, beispielsweise rechtwinkelige, Drehachse oder wird dadurch gebildet. Bevorzugt ist es, wenn zwei Drehfreiheitsgrade vorhanden sind, die von dem Mitnahme-Drehfreiheitsgrad verschieden sind und als Bewegungsfreiheitsgrade zur Bereitstellung oder Aufrechterhaltung der Mitnahmekopplung des Mitnehmers zu dem Kuppelgegenelement dienen.

Beispielsweise kann der Mitnehmer kardanisch bezüglich des Kuppelelementes oder an dem Kuppelelement gelagert sein. Die Kardanachsen oder kardanischen Achsen sind jedoch von der Mitnahme-Drehachse verschieden. Beispielsweise ist der Mitnehmer an dem Lagerkörper drehbar um die Mitnahme-Drehachse gelagert, welcher seinerseits kardanisch bezüglich des Kuppelelements gelagert ist.

Weiterhin vorteilhaft ist es, wenn der Mitnehmer oder der Lagerkörper, der den Mitnehmer bezüglich der Mitnahme-Drehachse drehbar lagert, anhand mindestens eines Kugelgelenks bezüglich des Kuppelelements oder an dem Kuppelelement gelagert ist.

Das Kugelgelenk ist vorzugsweise bezüglich der Mitnahme-Drehachse an dem Kuppelelement oder bezüglich des Kuppelelements drehfest festgelegt. Es ist aber auch möglich, dass das Kugelgelenk bezüglich der Mitnahme-Drehachse und in Bezug auf das Kuppelelement nicht frei beweglich ist, sondern beispielsweise gebremst, zum Beispiel durch eine Reibbremse oder dergleichen.

Der Mitnehmer ist vorteilhaft bezüglich des Kuppelelements zur Bereitstellung oder Aufrechterhaltung der Mitnahmekopplung zu dem Kuppelgegenelement mit mindestens einem von der Drehbarkeit um die Mitnahme-Drehachse verschiedenen Drehfreiheitsgrad beweglich gelagert, der eine Auslenkung des Mitnehmers bezüglich des Kuppelelements von minimal 3° oder minimal 5° oder minimal 10° aus einer Mittellage des Mitnehmers bezüglich des Kuppelelements ermöglicht und/oder der eine Auslenkung des Mitnehmers bezüglich des Kuppelelements von maximal 30°, vorteilhaft maximal 20° oder maximal 10° aus einer Mittellage des Mitnehmers bezüglich des Kuppelelements ermöglicht. Der Mitnehmer kann aus der Mittellage bezüglich der von der Mitnahme-Drehachse verschiedenen Drehachse, die man auch als eine Schwenkachse bezeichnen kann, zu einander entgegengesetzten Seiten hin um jeweils maximal 30°, insbesondere maximal 20° oder maximal 10°, auslenkbar sein. Eine darüber hinausgehende stärkere Auslenkung des Mitnehmers aus der Mittellage ist vorteilhaft nicht nötig und/oder nicht vorgesehen.

Eine maximale Gesamt-Auslenkbarkeit des Mitnehmers um eine zu der Mitnahme-Drehachse winkeligen Drehachse/Schwenkachse beträgt beispielsweise maximal 60°, maximal 40° oder maximal 20°.

Vorzugsweise ist nämlich vorgesehen, dass der Mitnehmer bezüglich des Kuppelelementes um mindestens eine Verschiebeachse oder Linearachse verschieblich gelagert ist, beispielweise um eine Linearachse oder Verschiebeachse, die zu der Mitnahme-Drehachse koaxial oder parallel ist.

Bevorzugt ist der Mitnehmer bezüglich des Lagerkörpers, insbesondere bezüglich der Mitnahme-Drehachse, linear unverschieblich angeordnet, jedoch drehbar um die Mitnahme-Drehachse. Die lineare Unverschieblichkeit kann in Bezug auf eine oder mehrere Achsen, insbesondere eine oder mehrere Drehachsen vorgesehen sein.

Vorteilhaft kann vorgesehen sein, dass der Mitnehmer an dem Lagerkörper ausschließlich um die Mitnahme-Drehachse drehbar gelagert ist, jedoch ansonsten keinen Bewegungsfreiheitsgrad bezüglich des Lagerkörpers aufweist.

Vorteilhaft ist vorgesehen, dass der Mitnehmer an dem Lagerkörper ausschließlich drehbar gelagert ist.

Der Lagerkörper hingegen kann bezüglich des Kuppelelements linear verschieblich gelagert sein, insbesondere parallel zu der Mitnahme-Drehachse. Somit wird eine lineare Verschieblichkeit des Mitnehmers relativ zu dem Kuppelgegenelement durch die lineare Verschieblichkeit oder eine lineare Verschieblichkeit des Lagerkörpers relativ zum Kuppelelement bereitgestellt. Die lineare Verschieblichkeit des Mitnehmers parallel zu der Mitnahme-Drehachse ist vorzugsweise die einzige lineare Verschieblichkeit des Mitnehmers relativ zu dem Kuppelelement. Der Mitnehmer ist ansonsten nicht linear verschieblich, jedoch vorzugsweise um mindestens einen Drehfreiheitsgrad, der von einer Drehung um die Mitnahme-Drehachse verschieden ist, drehbar.

Die Sensorvorrichtung umfasst erfindungsgemäß eine Halteeinrichtung zu einem bezüglich der Mitnahme-Drehachse drehfesten Halten des Lagerkörpers an dem Kuppelelement. Der Lagerkörper selbst ist also bezüglich des Kuppelelementes durch die Halteeinrichtung drehfest gehalten. Am Lagerkörper wiederum ist der Mitnehmer um die Mitnahme-Drehachse beweglich gelagert.

Die Sensorvorrichtung ist zweckmäßigerweise anhand eines Befestigungsmittels an der Zugfahrzeugkupplung befestigbar. Das Befestigungsmittel umfasst beispielsweise ein Schraubmittel, ein Klemmmittel, eine Formschlusskontur oder dergleichen. Auch eine Verklebung und/oder Verschweißung als Befestigungsmittel zur Befestigung der Sensorvorrichtung an der Zugfahrzeugkupplung ist ohne weiteres vorteilhaft. Kleben und Schweißen haben den Vorteil, dass die Struktur der Zugfahrzeugkupplung unverändert bleibt, Beispielweise keine Löcher oder dergleichen notwendig sind. Zur Herstellung einer Schweißverbindung zwischen der Sensorvorrichtung und der

Zugfahrzeugkupplung eignet sich beispielsweise ein Kondensatorentladungsschweißen. Ferner kann die Sensorvorrichtung mit der Zugkugelkupplung anhand mindestens einer Niet verbunden sein. Weiterhin können sogenannte Schweißbolzen, jedenfalls mindestens ein Schweißbolzen, eingesetzt werden, d. h. Bolzen, mit denen eine Komponente davon mit der Zugfahrzeugkupplung verschweißt sind.

Schließlich eignet sich als ein Befestigungsmittel auch ein Saugmittel, beispielsweise ein Saugkopf. Ein Saugkopf kann z.B. an der Halteeinrichtung angeordnet sein und zum Ansaugen der Halteeinrichtung an einen Kupplungsarm oder eine Fläche neben einer Kupplungsaufnahme der Zugfahrzeugkupplung ausgestaltet und/oder vorgesehen sein.

Die Halteeinrichtung umfasst zweckmäßigerweise das oben genannte oder ein Befestigungsmittel, zum Beispiel ein Schraubmittel, Klemmmittel, eine Formschlusskontur oder dergleichen, zur Befestigung an dem Kuppelelement oder bei dem Kuppelelement der Zugfahrzeugkupplung. Als ein Schraubmittel sind beispielsweise eine oder mehrere Schrauben vorgesehen. Eine Verklemmung mittels beispielsweise Klemmkonturen, einem Klemmvorsprung oder dergleichen ist ebenfalls vorteilhaft, um die Halteeinrichtung an dem Kuppelelement oder neben dem Kuppelelement der Zugfahrzeugkupplung zu befestigen. Als Befestigungsmittel kann aber auch eine Verklebung dienen. Als Formschlusskontur eignet sich beispielsweise ein Stützvorsprung, eine Hakenkontur oder dergleichen, mit der die Halteeinrichtung formschlüssig an der Zugfahrzeugkupplung zu befestigen ist.

Die Halteeinrichtung kann dazu dienen, den Lagerkörper mit mindestens einem zur Bereitstellung oder Aufrechterhaltung der Mitnahmekopplung des Mitnehmers zu dem Kuppelgegenelement geeigneten Bewegungsfreiheitsgrad, der sich von der Drehbarkeit um die Mitnahme-Drehachse unterscheidet, bezüglich des Kuppelelementes zu lagern. Beispielsweise ist die Halteeinrichtung kardanisch bezüglich des Kuppelelementes gelagert.

Die Halteeinrichtung kann beispielsweise eine Lagereinrichtung für den Lagerkörper bilden, an dem der Mitnehmer um die Mitnahme-Drehachse drehbar gelagert ist.

Die Halteeinrichtung weist beispielsweise einen Träger, insbesondere eine Tragplatte, für den Lagerkörper auf.

Es ist möglich, dass der Träger anhand der erwähnten Befestigungsmittel und/oder einer Befestigungseinrichtung lösbar mit dem Kuppelelement oder einer das Kuppelelement tragenden Komponente der Zugfahrzeugkupplung verbunden ist. Die Befestigungseinrichtung umfasst beispielsweise eine Schraubanordnung mit einer oder mehreren Schrauben und/oder eine Rastanordnung und/oder eine Klemmanordnung oder dergleichen

Der Träger ist erfindungsgemäß an dem Kuppelelement oder bezüglich des Kuppelelements beweglich gelageprt.

Insbesondere in diesem Fall ist es möglich, dass der Lagerkörper selbst fest mit dem Träger verbunden ist, d.h., dass die Beweglichkeit des Lagerkörpers um einen oder mehrere Bewegungsfreiheitsgrade, die von der Drehbarkeit um die Mitnahme-Drehachse verschieden sind, ausschließlich oder im Wesentlichen durch die Halteeinrichtung bereitgestellt wird.

Weiterhin ist es aber auch möglich, dass der Lagerkörper an dem Träger mit mindestens einem von der Drehbarkeit um die Mitnahme-Drehachse verschiedenen Bewegungsfreiheitsgrad beweglich gelagert ist. Der Träger kann also in diesem Fall sogar fest mit dem Kuppelelement der Zugfahrzeugkupplung oder an dem Kuppelelement der Zugfahrzeugkupplung verbunden sein, während die Beweglichkeit des Mitnehmers abgesehen von der Mitnahme-Drehachse durch eine bewegliche Lagerung des Lagerkörpers an dem Träger der Halteeinrichtung bereitgestellt wird.

Bevorzugt ist es, wenn der Lagerkörper bezüglich des Kuppelelementes der Zugfahrzeugkupplung mit Ausnahme einer Drehbarkeit um die Mitnahme-Drehachse schwimmend und/oder mit mindestens zwei Bewegungsfreiheitsgraden beweglich gelagert ist. So kann beispielsweise der Lagerkörper um zwei voneinander verschiedene Schwenkachsen bezüglich des Kuppelelementes beweglich gelagert sein, die sich von der Mitnahme-Drehachse unterscheiden, insbesondere zu dieser winkelig sind.

Eine vorteilhafte Ausgestaltung der Erfindung oder auch eine an sich eigenständige Erfindung im Zusammenhang mit den Merkmalen des Oberbegriffs des Anspruchs 1 stellt die folgende Maßnahme dar.

An dem Lagerkörper ist der Mitnehmer vorteilhaft an mindestens zwei Drehlagern, beispielsweise Wälzlagern, insbesondere Rollenlagern, Kugellagern oder dergleichen, zwischen denen bezüglich der Mitnahme-Drehachse ein Abstand vorhanden ist, drehbar gelagert. In dem Abstand kann beispielsweise der mindestens eine Sensor oder eine Sensorvorrichtung angeordnet sein. Das Lagerkonzept mit beabstandeten Drehlagern ermöglicht eine optimale Abstützung des Mitnehmers an dem Lagerkörper. Eine Verkantung oder sonstige ungünstige Lage des Mitnehmers relativ zu dem Lagerkörper kann durch die beiden zu einander beabstandeten Drehlager vermieden oder verringert werden. Dadurch läuft der Mitnehmer relativ zum Lagerkörper besonders leicht.

Weiterhin ist es vorteilhaft, dass der Mitnehmer an einander entgegengesetzten Längsendbereichen des Lagerkörpers bezüglich der Mitnahme-Drehachse drehbar gelagert ist. Beispielsweise ist der Mitnehmer an einem freien Längsendbereich sowie an einem Fußbereich des Lagerkörpers, mit dem dieser an einem weiteren Körper, insbesondere der vorgenannten Halteeinrichtung oder Halteeinrichtung verbunden ist, gelagert.

Auch wenn nur ein einziges Drehlager, aber auch wenn zwei oder weitere Drehlager zwischen Lagerkörper und Mitnehmer vorhanden ist oder sind, ist es vorteilhaft, wenn das oder alle Drehlager zwischen Lagerkörper und Mitnehmer als Wälzlager, insbesondere Rollenlager, Kugellager, Nadellager oder dergleichen, ausgestaltet ist oder sind. Dadurch dreht der Mitnehmer bezüglich des Lagerkörpers besonders leicht, so dass die Mitnahme durch das Kuppelgegenelement einfacher realisierbar ist.

Der Mitnehmer weist zweckmäßigerweise eine von der Mitnahme-Drehachse durchsetzte Stirnfläche auf, die zur Mitnahme durch das Kuppelgegenelement ausgestaltet und/oder vorgesehen ist. Die Stirnfläche ist beispielsweise eine Reibschlussfläche, eine Fläche mit Formschlusskonturen oder dergleichen. Mithin dient die Stirnfläche zur reibschlüssigen oder formschlüssigen Mitnahme durch das Kuppelgegenelement. Die Stirnfläche eignet sich aber auch dann zu einer optimalen Mitnahme, wenn eine Magnethaftung gegeben ist und/oder wenn der Mitnehmer durch eine Federanordnung in Richtung eines Mitnahme-kontakts mit dem Kuppelgegenelement belastet ist, was später noch deutlicher wird.

Die Stirnfläche ist zweckmäßigerweise als eine Planfläche ausgestaltet oder weist eine Planfläche auf.

Eine von der Mitnahmedrehachse durchsetzte Stirnseite des Mitnehmers weist zweckmäßigerweise mindestens einen Ring auf oder wird durch einen Ring gebildet. Es versteht sich, dass an der Stirnseite einerseits eine Stirnfläche, andererseits zudem noch ein Ring vorhanden sein kann, der beispielsweise an einem Außenumfang des Kuppelgegenelementes angreift oder mit seiner Stirnseite an einem Außenumfang des Kuppelgegenelementes in Kontakt treten kann. Der Ring kann sozusagen als Ringvorsprung vor eine Stirnfläche ausgestaltet sein, die ebenfalls zur reibschlüssigen, formschlüssigen oder sonstigen Mitnahmekopplung mit dem Kuppelgegenelement vorgesehen ist.

Der Mitnehmer weist vorteilhaft mindestens eine Schrägfläche, insbesondere eine Einführschräge, eine konische Fläche oder dergleichen, auf, an der das Kuppelgegenelement beim Ankuppeln an die Zugfahrzeugkupplung entlanggleiten kann. Eine derartige Schrägfläche kann beispielsweise als eine konische Schrägfläche zwischen einerseits der vorgenannten Stirnfläche oder Planfläche und andererseits einem Außenumfang des Mitnehmers ausgestaltet oder vorgesehen sein.

Bevorzugt weist die Sensorvorrichtung ein Kraftbeaufschlagungsmittel oder mehrere Kraftbeaufschlagungsmittel zu einer Kraftbeaufschlagung des Mitnehmers in Richtung des Kuppelgegenelementes auf. Mithin wird also der Mitnehmer zum Kuppelgegenelement hin kraftbeaufschlagt, was die Mitnahmekopplung erleichtert oder verbessert.

Bevorzugt hat die Sensorvorrichtung eine Federanordnung zur Bereitstellung einer den Mitnehmer in Richtung des Kuppelgegenelementes beaufschlagenden Federkraft. Die Federanordnung kann eine oder mehrere Federn, insbesondere metallische Federn, Schraubenfedern, Spiralfedern oder dergleichen umfassen.

Die Federkraft kann aber auch ganz oder teilweise durch eine gewisse Elastizität eines Mitnehmerkörpers des Mitnehmers bereitgestellt oder unterstützt werden. Eine Kombination von dem Mitnehmer separaten Federn, insbesondere metallischen Federn, Federpuffern oder dergleichen, mit einem elastischen oder federelastischen Mitnehmerkörper des Mitnehmers ist ohne weiteres möglich.

An dieser Stelle sei erwähnt, dass der Mitnehmer vorteilhaft mindestens einen elastischen Abschnitt zur elastischen Verformung durch das Kuppelgegenelement aufweist. Mithin kann also beispielsweise die Kraftbeaufschlagung durch eine Feder, einen Magnet oder dergleichen in Richtung des Kuppelgegenelementes erfolgen. Der elastische Abschnitt gibt dann nach. Der Mitnehmer ist also durch das Kuppelgegenelement vorteilhaft elastisch verformbar oder zumindest partiell elastisch verformbar.

Weiterhin ist es vorteilhaft, wenn die Sensorvorrichtung eine Magnetanordnung zur Bereitstellung einer den Mitnehmer in Richtung des Kuppelgegenelementes beaufschlagenden magnetischen Anziehungskraft aufweist. Die Magnetanordnung kann einen oder mehrere Magnete umfassen, die beispielsweise mit dem an sich ferromagnetischen Kuppelgegenelement zusammenwirken.

Die Magnetanordnung kann Permanentmagneten und/oder elektromagnetisch wirkende Magneten umfassen. Beispielsweise umfasst die Magnetanordnung eine oder mehrere elektrische Spulen.

Die Magnetanordnung kann eines oder mehrere Flussleitelemente zur Lenkung des magnetischen Flusses, den ein Permanentmagnet oder Elektromagnet der Magnetanordnung erzeugt, aufweisen. Beispielsweise ist ein derartiges Flussleitelement, insbesondere ein weichmagnetisches Flussleitelement, dazu ausgestaltet und vorgesehen, den magnetischen Fluss in Richtung des Kuppelgegenelementes zu lenken oder leiten. Das Flussleitelement ist beispielsweise dazu geeignet, eine Anziehungskraft des Mitnehmers in Richtung des Kuppelgegenelements zu verstärken oder auszurichten.

Die Magnetanordnung kann zur Betätigung und Erregung des mindestens einen Sensors ausgestaltet oder angeordnet sein. Mithin wird also die Magnetanordnung sozusagen doppelt genutzt, nämlich zum einen für die Erzeugung der Anziehungskraft in Richtung des Kuppelgegenelementes, zum andern aber auch zur Erregung oder Betätigung des mindestens einen Sensors.

Weiterhin ist es aber auch möglich, dass die Magnetanordnung eine Abschirmungseinrichtung zur Abschirmung des mindestens einen Sensors gegenüber magnetischen Einflüssen der Magnetanordnung aufweist. Somit kann beispielsweise das Magnetfeld der Magnetanordnung vom Sensor weg oder um den Sensor herum gelenkt werden. An dieser Stelle ist aber zu erwähnen, dass auch eine Kombination von magnetischer Abschirmung und magnetischer Betätigung des Sensors möglich ist. So kann beispielsweise eine Leitung des magnetischen Flusses oder des Magnetfelds der Magnetanordnung um einen Teilbereich des Sensors herum erfolgen, um eine Fehlbetätigung zu vermeiden, wobei dennoch das Magnetfeld in Richtung des Sensors gerichtet ist, jedoch an eine andere Stelle.

An dem Mitnehmer ist zweckmäßigerweise mindestens eine Reibschlussfläche für einen reibschlüssigen Kontakt mit dem Kuppelgegenelement und/oder mindestens eine Formschlusskontur für einen formschlüssigen Eingriff des Kuppelgegenelementes und des Mitnehmers ineinander vorgesehen oder angeordnet. Die Reibschlussfläche kann beispielsweise eine Gummifläche oder dergleichen umfassen.

Der Mitnehmer kann einen Mitnahmering oder ringförmigen Abschnitt aufweisen. Mehrere Teilringe, die miteinander gekoppelt oder verbunden sind, können bei dem Mitnehmer auch vorhanden sein. Vorteilhaft ist weiterhin eine ringförmige oder teilringförmige Umfangsmitnahmekontur bei dem Mitnehmer.

Der Mitnehmer weist zweckmäßigerweise einen domartigen oder turmartigen Mitnahmekörper auf. Der Mitnahmekörper kann beispielsweise in der Art einer Haube oder einer Abdeckung ausgestaltet sein.

Der Mitnehmer bildet zweckmäßigerweise ein Schutzgehäuse oder eine Abdeckung für den mindestens einen Sensor.

Vorteilhaft ist es auch, wenn der Mitnehmer ein Schutzgehäuse für einen den Mitnehmer lagernden Lagerkörper, beispielsweise eine Lagerwelle oder dergleichen, bildet oder aufweist.

Vorteilhaft ist auch eine mehrteilige, insbesondere zweiteilige, Ausgestaltung des Mitnehmers:
Bevorzugt ist es, wenn der Mitnehmer einen Mitnehmer-Träger aufweist, an dem ein Mitnahmekörper lösbar befestigt ist. Die mindestens eine Reibschlussfläche oder eine Anordnung mehrerer Reibschlussflächen mit Partikeln ist an dem Mitnahmekörper vorgesehen. Der Mitnehmer-Träger ist beispielsweise an dem Kuppelelement, dem vom Kuppelelement separaten Lagerelement oder dergleichen drehbar gelagert. Der Mitnehmerkörper selbst ist das Verschleißteil, welches bei Bedarf ausgewechselt werde kann. Auch dann, wenn die Sensorvorrichtung sozusagen inaktiv sein soll, bietet diese Lösung Vorteile. Man kann nämlich den Mitnahmekörper vom Mitnehmer-Träger entfernen, so dass der Mitnehmer-Träger keinen Mitnahmekontakt mit dem Kuppelgegenelement haben kann.

Der Mitnehmer-Träger bildet sozusagen die drehbar gelagerte Komponente, während der Mitnahmekörper am Mitnahme-Träger befestigt, beispielsweise verrastet, verklebt, verclipst, verschraubt oder dergleichen anderweitig befestigt ist.

Der Mitnehmer, insbesondere der Mitnehmer-Träger, kann beispielsweise ein Schutzgehäuse für den mindestens einen Sensor und/oder eine Auswerteeinrichtung des Sensors bilden.

Der Mitnehmer, insbesondere der Mitnehmer-Körper, weist zweckmäßigerweise eine Aufgleitschräge zum Aufgleiten des Kuppelgegenelements auf. Somit kann das Kuppelgegenelement den Mitnahmekörper beim Ankuppeln des Kuppelgegenelements an das Kuppelelement nicht beschädigen oder leicht in Mitnahme-Kontakt mit dem Mitnahmekörper gelangen. Die Aufgleitschräge für das Kuppelgegenelement ist vorzugsweise an einem Randbereich des Mitnahmekörpers vorgesehen.

Der Mitnahmekörper kann den Mitnehmer-Träger ringförmig umgeben. Diese Variante ist insbesondere dann vorteilhaft, wenn der Mitnahmekörper am Kuppelelement, insbesondere einer Kupplungskugel, direkt angeordnet ist.

Es ist auch vorteilhaft, wenn der Mitnahmekörper eine Abdeckkappe oder einen Deckel für den Mitnehmer-Träger bildet. Beispielsweise sind die Reibschlussflächen dann stirnseitig und/oder radial außen am Mitnahmekörper angeordnet.

Vorteilhaft ist es, wenn der Mitnahmekörper in der Art eines Pilzes oder dergleichen vor den Mitnehmer-Träger vorsteht. Bevorzugt ist beispielsweise, wenn der Mitnahmekörper quer zur Mitnahme-Drehachse vor den Mitnehmer-Träger vorsteht.

Der mindestens eine Sensor und/oder ein den Mitnehmer um die Mitnahme-Drehachse lagernder Lagerkörper, beispielsweise eine Lagerwelle, ist vorzugsweise in einem Innenraum des Mitnehmers angeordnet, insbesondere vollständig angeordnet. Aber auch eine teilweise Anordnung des mindestens einen Sensors oder des Lagerkörpers im Innenraum des Mitnehmers ist möglich. So kann der Mitnehmer beispielsweise einen Endbereich des Lagerkörpers, insbesondere einer Lagerwelle, überdecken. Der mindestens eine Sensor und/oder der Lagerkörper sind beispielsweise unterhalb einer Stirnwand oder Deckenwand und in einem durch eine Umfangswand des Mitnehmers begrenzten Innenraum angeordnet.

Die Sensorvorrichtung umfasst zweckmäßigerweise mindestens einen um die Mitnahme-Drehachse drehbar gelagerten Sensor oder Sensorgeber, insbesondere einen Ring, der eine Anordnung mehrerer Sensoren oder Sensorgeber umfasst. Der drehbar gelagerte Sensor oder Sensorgeber ist mit dem Mitnehmer drehgekoppelt oder drehverbunden. Wenn also der Mitnehmer um die Mitnahme-Drehachse dreht, nimmt er den mindestens einen Sensor oder Sensorgeber mit.

Weiterhin vorteilhaft ist es, wenn die Sensorvorrichtung eine Ringanordnung mehrerer um die Mitnahme-Drehachse angeordneter Sensoren oder Sensorgeber aufweist. Ein "Gegenstück" zum jeweiligen Sensor oder Sensorgeber, also für den Sensor ein Sensorgeber und für den Sensorgeber ein Sensor, ist zweckmäßigerweise bezüglich der Mitnahme-Drehachse ortsfest angeordnet. Durch die Ringanordnung mehrerer, insbesondere um die Mitnahme-Drehachse drehbarer, Sensoren oder Sensorgeber ist eine optimale Auflösung eines Winkelsignals möglich, welches die Sensorvorrichtung bei einer Drehung des Mitnehmers um die Mitnahme-Drehachse erzeugt, möglich.

Bei der Gelenk-Drehachse, die mit der Mitnahme-Drehachse korrespondiert, handelt es sich zweckmäßigerweise um eine Hochachse und/oder eine im Wesentlichen vertikal verlaufende Drehachse.

Es ist möglich, dass die Gelenk-Drehachse und die Mitnahme-Drehachse koaxial sind und/oder miteinander fluchten, wenn das Kuppelelement und das Kuppelgegenelement aneinander gekuppelt sind.

Es ist aber auch ein Querabstand zwischen diesen beiden Drehachsen möglich. Zumindest vorteilhaft ist es, wenn die Gelenk-Drehachse und die Mitnahme-Drehachse parallel zueinander verlaufen, wenn das Kuppelelement und das Kuppelgegenelement aneinander gekuppelt sind.

Ein Vorteil der Erfindung ist es, wenn oder dass die Sensorvorrichtung am Zugfahrzeug angeordnet ist, während das Anhängerfahrzeug sozusagen die passive, jedoch die Sensorvorrichtung betätigende Einrichtung bildet. Das Anhängerfahrzeug braucht nicht modifiziert zu werden.

Die Sensorvorrichtung kann zur Nachrüstung von Zugfahrzeugen vorgesehen sein, d. h. dass die Zugfahrzeugkupplung erst nachträglich mit der Sensorvorrichtung auszustatten ist, z.B. durch Ankleben, Anschweißen, Anklemmen oder dergleichen.

Weiterhin ist es möglich, dass die Zugfahrzeugkupplung und/oder die Kupplung des Anhängerfahrzeugs, die das Kuppelgegenelement aufweist, mechanisch nicht verändert wird oder zu verändern ist. Insbesondere bleiben im Kraftfluss oder zur Kraftübertragung zwischen Zugfahrzeug und Anhängefahrzeug vorgesehene Komponenten der Zugfahrzeugkupplung und der Kupplung des Anhängerfahrzeugs unverändert, beispielsweise die Bereiche des Kuppelelements und des Kuppelgegenelements, die ineinander eingreifen und das Gelenk bilden, und/oder eine Verriegelungseinrichtung der Zugfahrzeugkupplung oder der Kupplung des Anhängerfahrzeugs oder dergleichen.

Vorteilhaft ist vorgesehen, dass eine Verriegelungstechnik oder Verriegelungseinrichtung der Zugfahrzeugkupplung oder der Kupplung des Anhängerfahrzeugs nicht modifiziert werden muss.

Nachfolgend werden Ausführungsbeispiele der Erfindung anhand der Zeichnung erläutert. Es zeigen:
- Figur 1: eine perspektivische Schrägansicht einer Zugfahrzeugkupplung und einer Sensorvorrichtung sowie einer daran ankuppelbaren Anhänger-Kupplung,
- Figur 2: eine perspektivische Schrägansicht auf die Zugfahrzeugkupplung gemäß Figur 1 von unten,
- Figur 3: eine perspektivische Schrägansicht auf die Zugfahrzeugkupplung gemäß Figur 1 von schräg oben, wobei die Anhänger-Kupplung mit der Zugfahrzeugkupplung gekuppelt ist,
- Figur 4: eine Querschnittsansicht durch die Anordnung gemäß Figur 2 etwa entlang einer Schnittlinie S-S,
- Figur 5: ein Detail D aus Figur 4,
- Figur 6: eine Schnittdarstellung durch einen Mitnehmer der in Figur 5 dargestellten Sensorvorrichtung, etwa entlang einer Schnittlinie Y-Y,
- Figur 7: die Anordnung gemäß Figur 4 in Querschnittsansicht beim Ankuppeln der Anhänger-Kupplung an die Zugfahrzeugkupplung,
- Figur 8: die Anordnung entsprechend Figur 7, wobei die Anhänger-Kupplung um eine Gelenk-Drehachse relativ zur Zugfahrzeugkupplung verschwenkt ist,
- Figur 9: ein anderes Ausführungsbeispiel einer Zugfahrzeugkupplung, die als Kugelkupplung ausgestaltet ist und an die eine Anhänger-Kupplung in Gestalt einer Zugkugelkupplung angekuppelt ist, in perspektivischer Darstellung,
- Figur 10: die Anordnung gemäß Figur 9 von der Seite,
- Figur 11: ein Längsendbereich eines Kuppelelementes der Zugfahrzeugkupplung gemäß Figuren 9, 10,
- Figur 12: die Zugfahrzeugkupplung und die Anhänger-Kupplung gemäß Figur 9 vor dem Kuppeln der beiden Komponenten,
- Figur 13: eine Seitenansicht der Anordnung gemäß Figur 10 mit einer detaillierteren Darstellung einer Sensorvorrichtung,
- Figur 14: die Anordnung gemäß Figuren 9 und 10, wobei die Anhängerkupplung relativ zur Zugfahrzeugkupplung um eine Gelenk-Schwenkachse verschwenkt ist,
- Figur 15: eine schematische Darstellung der Kupplungskombination gemäß Figuren 12-14 mit einer detaillierter dargestellten Sensorvorrichtung,
- Figur 16: die schematische Ansicht gemäß Figur 15, wobei die Anhänger-Kupplung um einen Schwenkwinkel relativ zur Zugfahrzeugkupplung verschwenkt ist,
- Figur 17: ein Ausführungsbeispiel einer Sensorvorrichtung, die unterhalb einer Kupplungskugel angeordnet ist und ein Schutzgehäuse umfasst,
- Figur 18: ein Ausführungsbeispiel einer Sensorvorrichtung, mit einem kugelgelenkig gelagerten Lagerkörper,

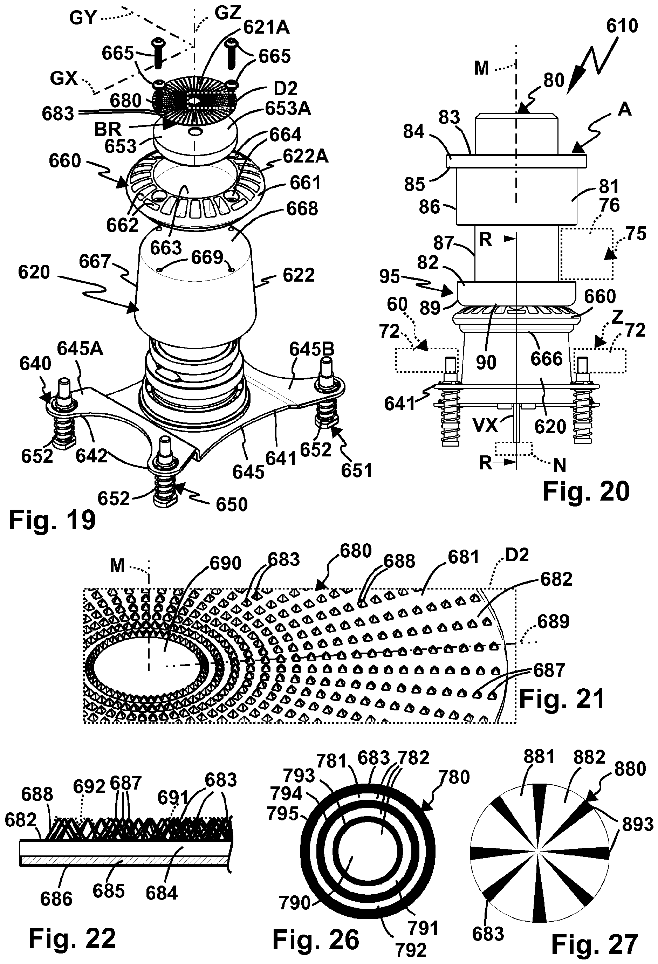

- Figur 19: eine Sensorvorrichtung in Explosionsdarstellung, die alternativ zu der Sensorvorrichtung gemäß Figur 1 an der Zugfahrzeugkupplung gemäß Figur 1 angeordnet sein kann,
- Figur 20: eine Seitenansicht der Sensorvorrichtung gemäß Figur 19 in Zusammenwirkung mit der Anhänger-Kupplung,
- Figur 21: ein Detail D2 aus Figur 19,
- Figur 22: eine teilweise Seitenansicht eines Mitnehmers der Sensorvorrichtung gemäß Figur 19, etwa in einer Blickrichtung BR,

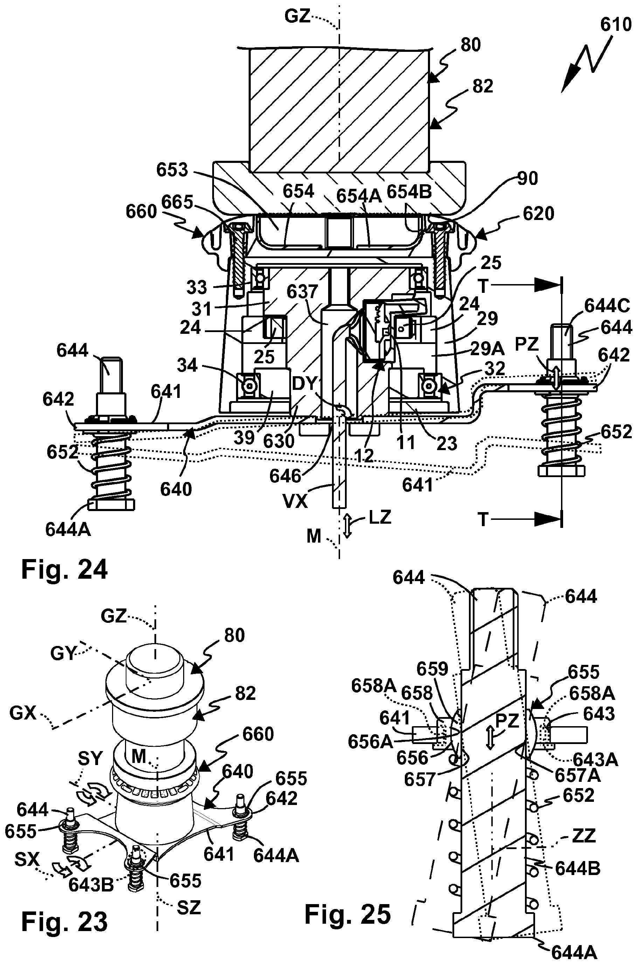

- Figur 23: eine perspektivische Schrägansicht von oben auf die Anordnung gemäß Figur 20,
- Figur 24: einen Schnitt durch die Zugfahrzeugkupplung gemäß Figur 20, etwas entlang einer Schnittlinie R-R,
- Figur 25: einen Schnitt durch eine Lagereinrichtung der Sensorvorrichtung gemäß Figuren 19-24, etwa entlang einer Schnittlinie T-T in Figur 24,
- Figur 26: eine Draufsicht auf einen alternativen Mitnehmerkörper,
- Figur 27: eine Draufsicht auf einen weiteren alternativen Mitnehmerkörper,

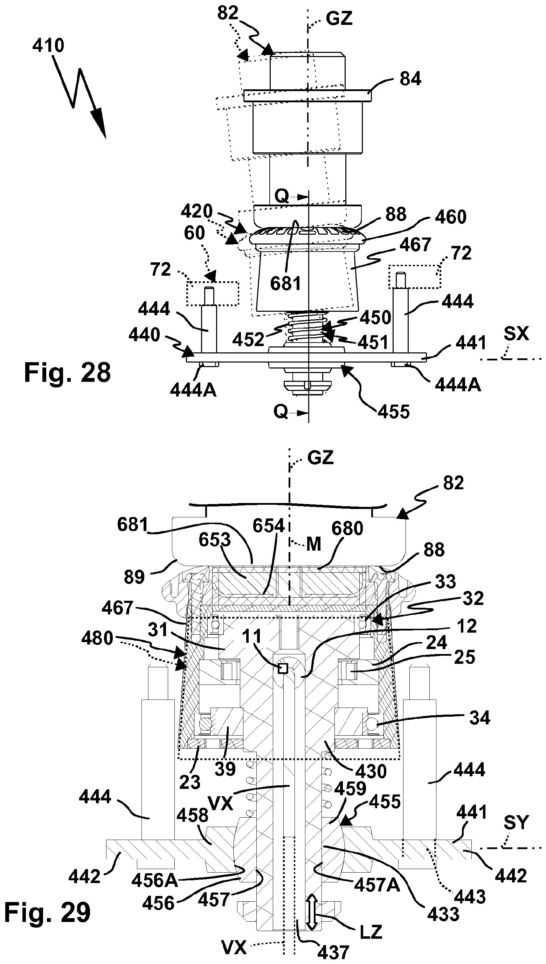

- Figur 28: eine Seitenansicht einer weiteren Sensorvorrichtung, die alternativ zur Sensorvorrichtung gemäß Figur 1 an der dort dargestellten Zugfahrzeugkupplung angeordnet ist,
- Figur 29: einen Schnitt durch die Sensorvorrichtung gemäß Figur 28, etwa entlang einer Schnittlinie Q-Q,

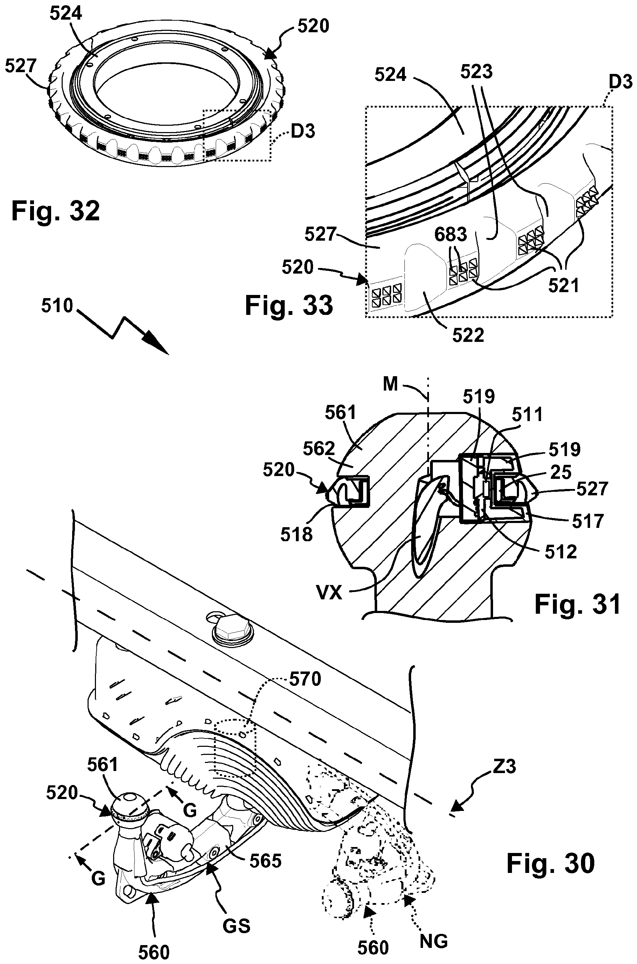

- Figur 30: eine Zugfahrzeugkupplung als Kugelkupplung, etwa entsprechend dem Ausführungsbeispiel gemäß Figur 9, mit einer anderen Sensorvorrichtung,
- Figur 31: einen Schnitt entlang einer Schnittlinie G-G durch ein Kuppelelement der Zugfahrzeugkupplung gemäß Figur 30,
- Figur 32: einen Mitnehmer der Sensorvorrichtung der Anhängekupplung gemäß Figur 30, von dem in
- Figur 33: ein Detail D3 vergrößert dargestellt ist.

Bei den nachfolgend erläuterten Ausführungsbeispielen sind Komponenten teilweise ähnlich oder in ihrer Funktionalität gleich. Insoweit werden Bezugsziffern verwendet, die um 100 verschieden sind oder teilweise auch identisch sind.

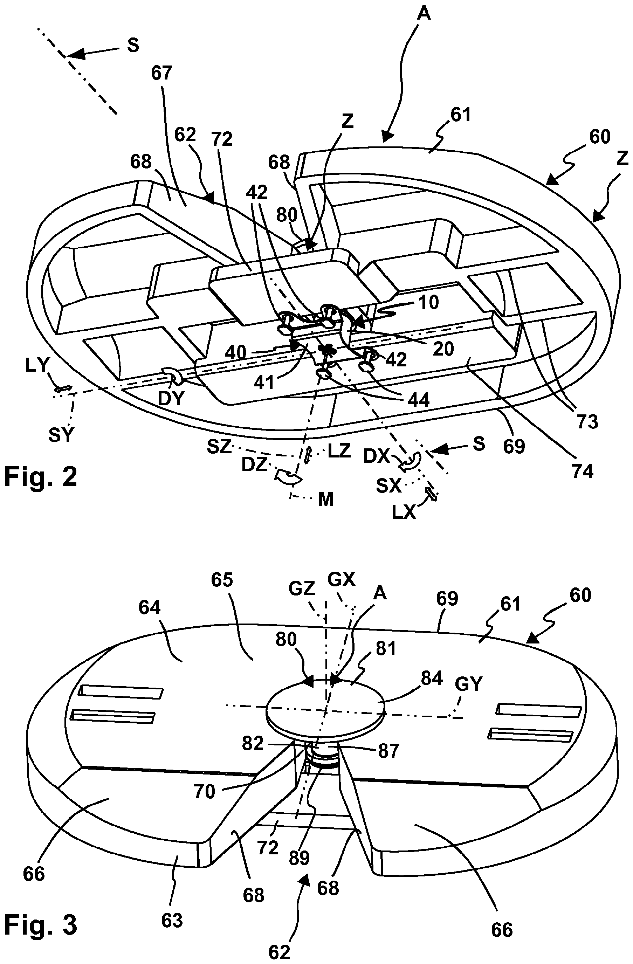

Eine Zugfahrzeugkupplung 60 ist als eine Sattelkupplung 60A ausgestaltet. Die Sattelkupplung 60A weist ein Kuppelelement 61 in Gestalt einer sogenannten Montageplatte 61A auf. An der Montageplatte 61A und mithin am Kuppelelement 61 ist eine Einführungsaufnahme 62 vorgesehen, die man auch als Einführungsöffnung bezeichnen kann. Die Einführungsaufnahme 62 erleichtert das Einführen eines Kuppelgegenelementes 81 einer Anhänger-Kupplung 80, die einen sogenannten Zapfen 82 oder Sattelzapfen 82 aufweist. Der Zapfen 82 dient zur Kupplung der Anhänger-Kupplung 80 mit der Zugfahrzeugkupplung 60, wobei der angekuppelte Zustand in den Figuren 2-8 dargestellt ist.

Die Zugfahrzeugkupplung 60 ist an einem Zugfahrzeug Z angeordnet oder anordenbar. Bei dem Zugfahrzeug Z handelt es sich beispielsweise um einen sogenannten Sattelschlepper oder einen sonstigen Lastkraftwagen.

Die Anhängerkupplung 80 hingegen ist an einem Anhänger A befestigt oder befestigbar, beispielsweise einem sogenannten Sattelauflieger.

Zum Ankuppeln der Anhängerkupplung 80 an die Zugfahrzeugkupplung 60 wird der Sattelzapfen oder Zapfen 82 beispielsweise von einer Rückseite des Zugfahrzeugs Z oder von einer Stirnseite 63 des Kuppelelementes 61 her zum Kuppelelement 61 herangeführt, wobei in der Praxis das Zugfahrzeug Z rückwärtsfährt, um den Sattelauflieger und mithin das Anhängerfahrzeug A anzukuppeln.

Das Anhängerfahrzeug A ist an einer Oberseite 83 der Anhänger-Kupplung 80 oder des Zapfens 82 abgestützt. Die Oberseite 83 ist beispielsweise mit einer Unterseite des Anhängerfahrzeugs A verbunden, beispielsweise verschweißt oder verschraubt.

Die Oberseite 83 ist an einem Flanschkörper 84 vorgesehen, dessen von der Oberseite 83 abgewandte Unterseite eine Stützfläche 85 zur Abstützung an der Zugfahrzeugkupplung 60 bildet. Die Stützfläche 85 dient zur Auflage auf einer Auflagefläche 65 an der Oberseite 64 der Montageplatte 61A oder dem Kuppelelement 61. Die Auflagefläche 65 und die Stützfläche 85 sind vorzugsweise Planflächen. Mithin ist also die Anhängerkupplung 80 an der Auflagefläche 65 in einer horizontalen Ebene großflächig abgestützt, so dass wesentliche Stützkräfte nicht auf den eigentlichen Sattelzapfen 82 wirken, der nämlich mit einem Zapfenabschnitt 91 in eine Kupplungsaufnahme 70 der Zugfahrzeugkupplung 60 eingreift.

An der Stirnseite 63 ist eine Aufgleitschräge 66 angeordnet, an der die Stützfläche 85 beim Ankuppeln der Anhängerkupplung 80 an die Zugfahrzeugkupplung 60 entlanggleiten kann. Das Einführen des Sattelzapfens 82 in die Kupplungsaufnahme 70 wird durch Einführschrägen 68, die die Einführungsaufnahme 62 seitlich begrenzen und zu der Kupplungsaufnahme 70 hin aufeinander zu im Sinne einer Verengung verlaufen, erleichtert. Die Einführschrägen 68 erstrecken sich von der Stirnseite 63 in Richtung einer Vorderseite 69 des Kuppelelementes 61 oder der Montageplatte 61A.

Die Kupplungsaufnahme 70 weist eine im Wesentlichen zylindrische Innenkontur 71 auf, wobei diese Innenkontur 71 nicht vollständig zylindrisch sein muss, sondern lediglich eine sozusagen umhüllende Innenkontur darstellt. Mithin ist der Zapfenabschnitt 91 mit seiner ebenfalls im Wesentlichen zylindrischen Außenumfangskontur 86 am Innenumfang der Kupplungsaufnahme 70 zumindest partiell abgestützt, so dass sich der Sattelzapfen 82 im Wesentlichen um eine Gelenk-Drehachse GZ relativ zu der Zugfahrzeugkupplung 60 drehen kann.

An einer Unterseite 74 des Kuppelelementes 61 oder der Montageplatte 61A ist ein Stützkörper 72 angeordnet. Der Stützkörper 72 ist neben und/oder unterhalb der Kupplungsaufnahme 70 vorgesehen. Der Stützkörper 72 kann plattenartig sein. Der Sattelzapfen 82 ist an dem Stützkörper 72 vorbei in die Kupplungsaufnahme 70 einzuführen, wenn die Anhänger-Kupplung 80 an die Zugfahrzeugkupplung 60 angekuppelt wird.

Das Kuppelelement 61 ist an seiner Unterseite 74 vorzugsweise noch durch eine Rippenstruktur oder durch Rippen 73 verstärkt, was die Auflagefläche oder Stützfläche 65 besonders belastbar macht.

Die Anhänger-Kupplung 80 ist an der Zugfahrzeugkupplung 60 durch eine Verriegelungseinrichtung 75 der Zugfahrzeugkupplung 60 verriegelbar. Die Verriegelungseinrichtung 75 umfasst einen Verriegelungskörper 76, der in eine Verriegelungsaufnahme 87 des Zapfens 82 eingreift, die an dessen Außenumfang 86 vorgesehen ist.

Der Zapfen 82 kann in die Kupplungsaufnahme 70 leicht eingebracht werden, indem nämlich beispielsweise eine an seiner Stirnseite 88, also an der dem Flanschkörper 84 entgegengesetzten Seite des Zapfens 82, eine Aufgleitschräge 89 vorhanden ist. Die Aufgleitschräge 89 wird beispielsweise durch einen gerundeten oder konischen Randabschnitt zwischen dem Außenumfang 86 und der Stirnseite 88 oder Stirnfläche des Zapfens 82 bereitgestellt.

Der Verriegelungskörper 76 ist zweckmäßigerweise durch einen manuellen oder motorischen Verriegelungsantrieb 77 antreibbar, so dass er in seiner Verriegelungsstellung in die Verriegelungsaufnahme 87 eingreift und in seiner Lösestellung aus der Verriegelungsaufnahme 87 heraus bewegt ist, so dass der Zapfen 82 aus der Kupplungsaufnahme 70 heraus bewegbar ist.

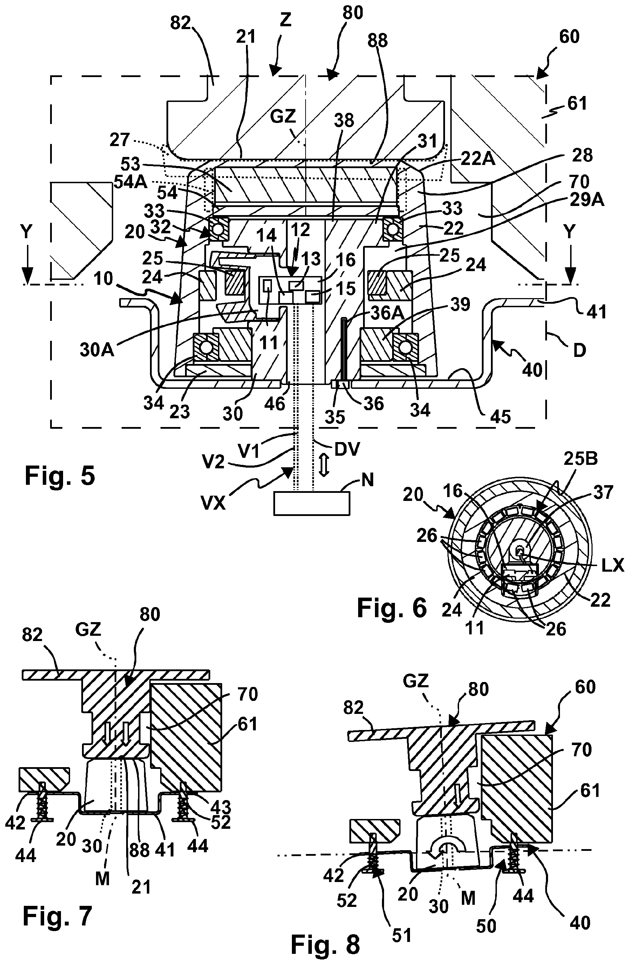

Man erkennt insbesondere in den Figuren 7 und 8, dass die Anhängerkupplung 80 bezüglich der Zugfahrzeugkupplung 60 zwar vorzugsweise um die Gelenk-Drehachse GZ drehen kann, also um eine beim Fahrbetrieb in der Regel etwa vertikale Drehachse, aber auch um Gelenk-Drehachsen GX und GY, also um eine Längsachse und eine Querachse, die insbesondere in Fahrzeuglängsrichtung des Zugfahrzeugs Z bzw. orthogonal rechtwinkelig zur Fahrzeuglängsrichtung des Zugfahrzeugs Z verlaufen.

Wenn die Anhängerkupplung 80 an die Zugfahrzeugkupplung 60 angekuppelt ist, kann das Kuppelgegenelement 81 relativ zum Kuppelelement 61 in Bezug auf die Gelenk-Drehachsen GX, GY und GZ drehen oder schwenken, so dass das Kuppelelement 61 und das Kuppelgegenelement 81 ein Gelenk 95 bilden. Das Kuppelgegenelement 81 und das Kuppelelement 61 sind in einem Lagerbereich 96 in lagerndem Eingriff miteinander. Der Lagerbereich 96 ist vorzugsweise etwa zylindrisch.

Beispielsweise kann das Anhängerfahrzeug A bei einer Kurvenfahrt relativ zum Zugfahrzeug Z im Wesentlichen um die Gelenk-Drehachse GZ schwenken. Das Anhängerfahrzeug A kann aber auch relativ zum Zugfahrzeug Z bei einer Wankbewegung oder Rollbewegung um die Gelenk-Drehachse GX und/oder bei einer Nickbewegung um die Gelenk-Drehachse GY schwenken oder drehen.

In all diesen Fällen ist es möglich, ein Schwenken bzw. ein Drehen des Anhängerfahrzeugs A relativ zum Zugfahrzeug Z um die Gelenk-Drehachse GZ zu ermitteln, nämlich anhand einer Sensorvorrichtung 10.

Die Sensorvorrichtung 10 ist in einem Aufnahmeraum 67 unterhalb der Kupplungsaufnahme 70 aufgenommen. Der Aufnahmeraum 67 ist ein ohnehin bei einer Norm-Sattelkupplung 60A vorhandener Aufnahmeraum, d.h. eine bauliche Modifikation ist nicht notwendig.

Die Sensorvorrichtung 10 ist zu einer Drehmitnahme durch das Kuppelgegenelement 81 vorgesehen, welches zu diesem Zweck eine Mitnahmefläche 90 aufweist. Die Mitnahmefläche 90 ist beispielsweise durch die Stirnseite 88 gebildet oder an dieser vorgesehen. Aber auch die Aufgleitschräge 89 oder ein sonstiger Bereich der Außenumfangskontur 86 können die Mitnahmefläche 90 ganz oder teilweise bilden, was noch deutlicher wird.

Die Sensorvorrichtung 10 weist einen Mitnehmer 20 auf, der durch das Kuppelgegenelement 81, nämlich den Zapfen oder Sattelzapfen 82, mitnehmbar und um eine Mitnahme-Drehachse M drehbar ist.

Der Mitnehmer 20 weist eine Mitnahmefläche 21 zur Herstellung eines Mitnahmekontaktes oder einer Mitnahmeverbindung mit dem Zapfen 82 auf. Die Mitnahmefläche 21 ist an einer freien Stirnseite des Mitnehmers 20 vorgesehen. Von der Mitnahmefläche 21 weg erstreckt sich eine Umfangswand 22, die beispielsweise im Wesentlichen konisch oder zylindrisch verläuft.

Die Mitnahmefläche 21 ist an einer Stirnwand 21A vorgesehen, die im Wesentlichen als plane oder ebene Wand ausgestaltet ist. Von der Stirnwand 21A erstreckt sich die Umfangswand 22 weg.

Es versteht sich, dass auch eine ringförmige Mitnahmekontur an einem erfindungsgemäßen Mitnehmer vorgesehen sein kann. So ist beispielsweise eine ringförmige Umfangsmitnahmekontur 27, insbesondere ein Ring, vorgesehen, die in Eingriff mit zumindest einem Teilbereich des Außenumfangs 86 des Zapfens 82 sein kann. Die Umfangsmitnahmekontur 27 kann teilringförmig sein, beispielsweise einen oder mehrere Mitnahmevorsprünge umfassen, die zu dem Zapfen 82 vorstehen.

Der Mitnehmerkörper 20A ist vorzugsweise im Bereich der Mitnahmefläche 21 und/oder der Umfangsmitnahmekontur 27 elastisch verformbar und weist dort einen elastischen Abschnitt 28 auf. Beispielsweise besteht der Mitnehmerkörper 20A zumindest im elastischen Abschnitt aus einem elastischen verformbaren Kunststoff oder Gummi.

Eine der Stirnwand 21A entgegengesetzte Seite des Mitnehmers 20 ist durch eine Bodenwand 23 im Wesentlichen verschlossen, so dass ein im Wesentlichen gekapselter oder schützender Innenraum 29A gebildet ist.

Die Stirnwand 21A und die Umfangswand 22 bilden Bestandteile eines Mitnehmerkörpers 20A. Der Mitnehmerkörper 20A ist domartig oder haubenartig und ist sozusagen bodenseitig durch die Bodenwand 23 verschlossen.

Mithin kapseln also der Mitnehmerkörper 20A und die Bodenwand 23 einen Innenraum 29A im Wesentlichen. Dadurch ist ein Schutzgehäuse 29 gebildet.

Das Schutzgehäuse 29 schützt die in seinem Innenraum 29A angeordneten, nachfolgend detailliert erläuterten Komponenten.

Die Sensorvorrichtung 10 umfasst einen Sensor 11, beispielsweise einen magnetischen Sensor, der in dem Innenraum 29A angeordnet ist. Von dem Sensor 11 erzeugte Signale werden von einer Auswerteeinrichtung 12 ausgewertet, die beispielsweise einen Prozessor 13 sowie einen Speicher 14 umfasst. Der Prozessor 13 führt Programmcode von mindestens einem Programm aus, welches die Sensorsignale des Sensors 11 verarbeiten und beispielsweise an eine Schnittstelle 15, insbesondere einen Buskoppler, für ein Bordnetz N des Zugfahrzeugs Z bereitstellt. Die Schnittstelle 15 ist beispielsweise eine CAN-Bus-Schnittstelle, kann aber auch ohne weiteres eine sonstige digitale oder analoge Schnittstelle sein oder umfassen.

Die Auswerteeinrichtung 12 ist beispielsweise an oder in einem Gehäuse 16 angeordnet. Anstelle des Gehäuses 16 kann aber auch eine Platine oder ein dergleichen anderer Träger für elektronische Komponenten, beispielsweise dem Prozessor 13 oder den Speicher 14 oder beide vorgesehen sein.

Die Auswerteeinrichtung 12 ist insgesamt, einschließlich des Sensors 11, in dem Innenraum 29A, d.h. im Mitnehmerkörper 20A geschützt aufgenommen.

Zur Erregung des Sensors 11 dienen Sensorgeber 25, beispielsweise Magnete, die an einem Sensorträger 24 angeordnet sind. Der Sensorträger 24 ist an der Innenseite der Umfangswand 22, mithin also im Innern des Mitnehmerkörpers 20A drehfest angeordnet. Der Sensorträger 24 weist eine im Wesentlichen ringförmige Gestalt auf. An seinem Innenumfang, dem Sensor 11 gegenüberliegend, weist der Sensorträger 24 Sensorelementaufnahmen 26 für die Sensorgeber 25 auf.

Die Sensorgeber 25 und die Sensorelementaufnahmen 26 (siehe Figur 6) sind ringförmig um die Mitnahme-Drehachse M des Mitnehmers 20 angeordnet und bilden eine Ringanordnung 25B. Wenn sich der Mitnehmer 20 um die Mitnahme-Drehachse M dreht, werden die Sensorgeber 25 an dem Sensor 11 vorbeigedreht, wodurch eine hohe Messgenauigkeit erzielbar ist.

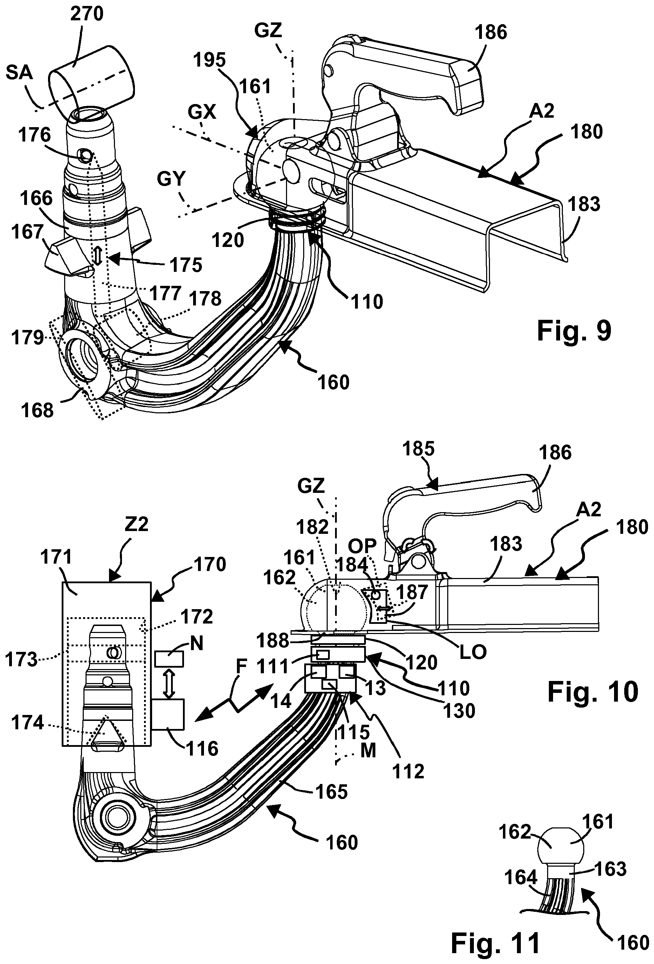

Die Sensorvorrichtung 10, insbesondere die Auswerteeinrichtung 12, ist über eine an die Schnittstelle 15 angeschlossene Leitungsanordnung VX mit dem Bordnetz N verbunden. Mithin ist also eine kabelgebundene Ankopplung der Sensorvorrichtung 10 an das Bordnetz N realisiert, wobei wie bei dem noch zu erläuternden Ausführungsbeispiel gemäß Figuren 9, 10 auch eine drahtlose Verbindung möglich ist, beispielsweise über Infrarot, Funk oder dergleichen.

Der Mitnehmer 20 ist um die Mitnahme-Drehachse M an einem Lagerkörper 30 drehbar gelagert. Der Lagerkörper 30 ist beispielsweise als eine Lagerwelle oder Lagerachse ausgestaltet. An seinem der Stirnwand 21A unmittelbar gegenüberliegenden Endbereich weist der Lagerkörper 30 einen Flanschvorsprung 31 auf, an dem ein Drehlager 33 gehalten ist. Im Bereich der Bodenwand 23 ist ein weiteres Drehlager 34 vorgesehen, welches anhand eines Stützkörpers 39 an dem Lagerkörper 30 abgestützt ist. Die Drehlager 33, 34 sind vorzugsweise Wälzlager, insbesondere Kugellager, Rollenlager oder dergleichen, weshalb sich der Mitnehmer 20 leichtgängig um die Mitnahme-Drehachse M dreht.

Der Lagerkörper 30 ist jedoch verdrehfest bezüglich der Mitnahme-Drehachse M anhand einer Verdrehsicherung 35 an einer Halteeinrichtung 40, die zum Halten der Sensorvorrichtung 10 an der Zugfahrzeugkupplung 60 vorgesehen ist, gehalten. Die Halteeinrichtung 40 weist eine Halteplatte 41 auf, an der der Lagerkörper 30 abgestützt ist oder vor die der Lagerkörper 30 vorsteht. Die Halteplatte 41 bildet einen Träger 47 für den Lagerkörper 30.

Beispielsweise umfasst die Verdrehsicherung 35 eine Schraube 36, die in eine Schraubaufnahme 36A eingeschraubt ist. Die Schraube 36 durchdringt eine Schrauböffnung an der Halteplatte 41, die exzentrisch zur Mitnahme-Drehachse oder Mittelachse des Lagerkörpers 30 ist.

Der Lagerkörper 30 hat eine langgestreckte, sich entlang der Mitnahme-Drehachse erstreckende Gestalt. Zwischen den Drehlagern 33, 34 ist ein Abstand vorgesehen, in dem der Sensor 11 angeordnet ist. Die voneinander beabstandeten oder zueinander beabstandeten Drehlager 33, 34 bieten eine optimale Abstützung des Mitnehmers 20 an dem Lagerkörper 30 in Bezug auf die Mitnahme-Drehachse M, so dass der Mitnehmer 20 quer zu der Mitnahme-Drehachse M optimal abgestützt ist.

Der Lagerkörper 30 hat zudem noch einen Aufnahmeraum 30A für den Sensor 11 sowie die Auswerteeinrichtung 12. Von dem Aufnahmeraum A verläuft ein Kanal 37 für die Leitungen der Leitungsanordnung VX, der bei der Halteplatte 41 ausmündet. Dort ist für die Leitungsanordnung VX eine Durchtrittsöffnung 46 vorgesehen, durch die die Leitungen der Leitungsanordnung VX hindurch geführt sind.

Die Leitungsanordnung VX umfasst beispielsweise eine Datenverbindung DV, die eine oder mehrere Busleitungen umfasst. Weiterhin sind Versorgungsverbindungen V1, V2, beispielsweise eine niedere Gleichspannung von 5-10 Volt sowie Masse, Bestandteile der Leitungsanordnung VX.

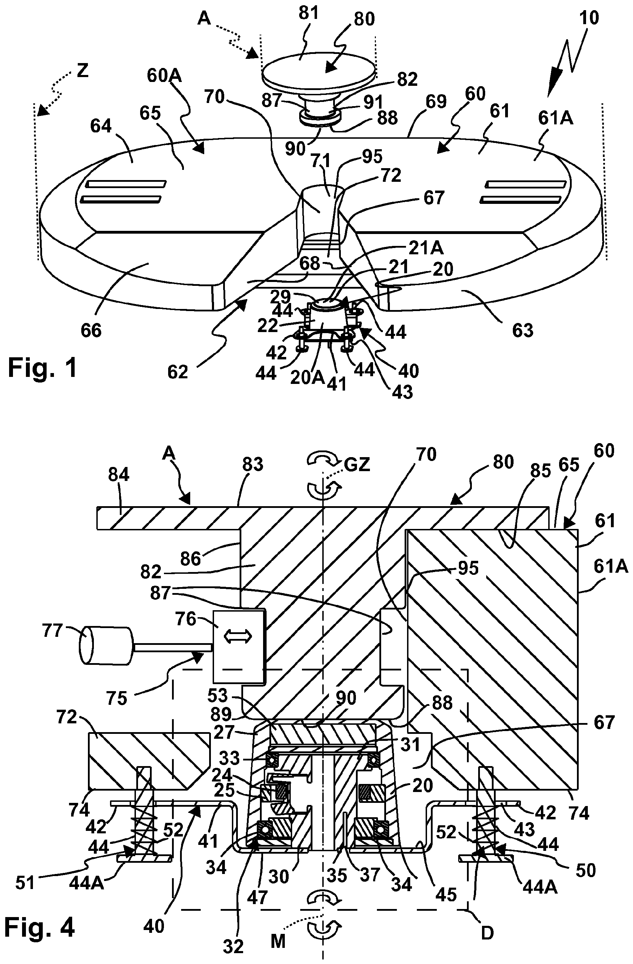

Der Mitnehmer 20 ist bezüglich des Kuppelelementes 61, insbesondere der Kupplungsaufnahme 70, beweglich gelagert, so dass er insbesondere beim Ankuppeln der Anhänger-Kupplung 80 an die Zugfahrzeugkupplung 60 von der Mitnahme-Drehachse M verschiedene Bewegungen sozusagen mitmacht. So kann beispielsweise die Aufgleitschräge 89 den Mitnehmer 20 aus seiner in den Figuren 4 und 5 dargestellten Lage, bei der die Mitnahme-Drehachse M mit der Gelenk-Drehachse GZ sozusagen fluchtet oder parallel dazu ist, ausgelenkt werden, so dass der Mitnehmer 20 um Drehfreiheitsgrade DX und DY und/oder lineare Bewegungsfreiheitsgrade LX, LY und LZ aus seiner Mittellage ausgelenkt werden kann. Die Schwenk-Freiheitsgrade oder Drehfreiheitsgrade DX, DY verlaufen orthogonal zu der Mitnahme-Drehachse M und jeweils orthogonal zueinander. Beispielsweise kann der Mitnehmer 20 mit dem Drehfreiheitsgrad DX um eine Achse SX schwenken, die parallel zur Gelenk-Drehachse GX ist. Bei Auslenkung oder Verschiebung mit dem linearen Bewegungsfreiheitsgrad LX kann der Mitnehmer 20 um die zu der Gelenk-Drehachse GX parallele Achse SX linear ausgelenkt werden, also rechtwinkelig zur Mitnahme-Drehachse M bewegt werden.

Der weitere lineare Bewegungsfreiheitsgrad LY erlaubt eine Auslenkung oder Verschiebung des Mitnehmers 20 quer zum Bewegungsfreiheitsgrad LX oder zur X-Achse und/oder entlang einer Achse SY, die zur Gelenk-Drehachse GY parallel ist. Bei einer Drehung um den Drehfreiheitsgrad DY dreht der Mitnehmer 20 um diese zur Gelenk-Drehachse GY parallele Achse SY.

Die Verschieblichkeit mit dem Bewegungsfreiheitsgrad LZ ist parallel oder koaxial zur Mitnahme-Drehachse M vorgesehen, z.B. um eine Achse SZ.

All die vorgenannten Drehfreiheitsgrade DX, DY oder lineare Bewegungsfreiheitsgrade LX, LY oder LZ ermöglichen es, dass der Mitnehmer 20 beispielsweise beim Ankuppeln der Anhänger-Kupplung 80 an die Zugfahrzeugkupplung 60 aus seiner Mittellage ausgelenkt wird, so dass seine Stirnwand 21A an der Stirnseite 88 bzw. der Stützfläche oder Mitnahmefläche des Zapfens 82 plan parallel zu liegen kommt. Man erkennt dies insbesondere in den Figuren 7 und 8. Darüber hinaus wird die Drehmitnahmekopplung des Mitnehmers 20 auch bei einer Auslenkung quer zu der Mitnahme-Drehachse M ermöglicht, siehe insbesondere Figur 8. So schwenkt beispielsweise der Mitnehmer 20 um die mit dem Drehfreiheitsgrad DX oder DY bei der Darstellung gemäß Figur 8, bleibt aber dennoch in Mitnahmekontakt mit dem Zapfen 82.

In einem Übergangsbereich oder Kantenbereich zwischen der Stirnwand 21A und der Umfangswand 22 ist vorzugsweise eine Schrägfläche 22A oder Einführschräge vorgesehen, an der das Kuppelgegenelement 81 beim Ankuppeln an das Kuppelelement 61, also beispielsweise beim Einführen in die Kupplungsaufnahme 70, entlanggleiten kann. Dabei kann das Kuppelelement 61 den Mitnehmer 20 beispielsweise quer zur Mitnahme-Drehachse M verkippen oder verschwenken und/oder längs der Mitnahme-Drehachse M verstellen.

Die Beweglichkeit des Mitnehmers 20 um die Bewegungsfreiheitsgrade DX, DY, LX, LY und LZ wird durch die Halteeinrichtung 40 bereitgestellt, an der der Lagerkörper 30 fest angeordnet ist, also unbeweglich ist.

Die Halteplatte 41 ist an der Unterseite 74 der Montageplatte 61A befestigt. So stehen beispielsweise Haltevorsprünge 42 der Halteplatte 41 vor einen Grundkörper derselben vor und/oder sind an den Eckbereichen der Halteplatte 41 vorgesehen. Die Haltevorsprünge 41 weisen Durchtrittsöffnungen 43 für Schrauben 44 auf, die in das Kuppelelement 61 und/oder den Stützkörper 72 von dessen/deren Unterseite 74 her eingeschraubt sind.

Anstelle der Schrauben 44 könnten aber auch beispielsweise sogenannte Schweißbolzen vorgesehen sein, deren Längsendbereiche an das Kuppelelement 61 angeschweißt sind, vorteilhaft anhand eines sogenannten Kondensatorschweißens oder Widerstandsschweißens.

Zwischen Köpfen 44A der Schrauben 44 und der Halteplatte 41 sind Federn 52 einer Federanordnung 51 vorgesehen, die sich einerseits an den Köpfen 44A, andererseits an der Halteplatte 41 und somit am Lagerkörper 40 abstützen. Damit wirken die Federn 52 als ein Kraftbeaufschlagungsmittel 50 dergestalt, dass sie den Mitnehmer 20 in Richtung des Zapfens 82 drücken, so dass dessen Stirnwand 21A an die Stirnseite 88 des Zapfens 82 gedrückt wird.

Der Lagerkörper 30, also die Lagerwelle oder Lagerachse, ist in einer Aufnahmevertiefung 45 der Halteeinrichtung 40 oder der Halteplatte 41 angeordnet und steht in Richtung der Kupplungsaufnahme 70 und somit im an die Zugfahrzeugkupplung 60 angekuppelten Zustand der Anhänger-Kupplung 80 zu dem Zapfen 82 vor.

Eine zusätzliche Kraft im Sinne einer Mitnahmekopplung ermöglicht ein Magnet 53, der zwischen dem Lagerkörper 30 und der Stirnwand 21A des Mitnehmers 20 angeordnet ist. Der Magnet 53 wirkt mit seiner magnetischen Anziehungskraft in Richtung des Zapfens 82. Beispielsweise ist der Magnet 53 zwischen einer Stirnseite 38 des Flansches oder Flanschvorsprunges 31 des Lagerkörpers 30 und der Stirnwand 21A sandwichartig gehalten.

Allerdings könnte der Magnet 53 eine Störung des Sensors 11 bewirken, beispielsweise die Magnetfelder der magnetischen Sensorgeber 25 überlagern oder stören. Zur Vermeidung dieser ungünstigen Situation ist eine Abschirmung 54 vorgesehen, die zwischen den magnetischen Sensorgebern 25 und dem Magnet 53 angeordnet ist. Beispielsweise besteht die Abschirmung 54 aus einem Flussleitblech oder weist ein solches auf. Die Abschirmung 54 ist vorzugsweise sandwichartig zwischen der Stirnseite 38 des Lagerkörpers 30 und dem Magnet 53 angeordnet. Bevorzugt ist eine den Sensorgebern 25 zugewandte Seite des Magnets 53 vollständig durch die Abschirmung 54, die beispielsweise plattenartig ist, abgeschirmt.

Die Abschirmung 54 kann den Magneten 53 aber auch umfangsseitig abschirmen, beispielsweise mit einer Abschirmungswand 54A, die vor die plattenartige oder wandartige Abschirmung 54 vorsteht und mit dieser einstückig sein kann.

Eine mehrachsige Schwenkbarkeit mit einem Gelenk 195 ist auch bei einer Kopplung einer Anhänger-Kupplung 180 an eine Zugfahrzeug-Kupplung 160 gegeben.

Die Zugfahrzeug-Kupplung 160 weist als ein Kuppelelement 161 einen Kugelkopf 162 auf. Der Kugelkopf 162 ist an einem freien Endbereich eines Kupplungsarmes 165 angeordnet, der am Heck eines Zugfahrzeugs Z2, beispielsweise eines Personenkraftwagens, befestigt oder lösbar befestigbar ist. Der Kupplungsarm 165 weist beispielsweise einen Montageabschnitt 166, insbesondere einen Steckabschnitt zur Befestigung an dem Zugfahrzeug Z2 auf. An dem Zugfahrzeug Z2 ist beispielsweise eine Fahrzeug-Halterung 170 angeordnet. Die Fahrzeug-Halterung 170 umfasst einen Aufnahmekörper 171, der insbesondere an einem Querträger oder einer sonstigen Haltestruktur am Heck des Zugfahrzeugs Z2 lösbar befestigt ist. Am Aufnahmekörper 171 ist eine Steckaufnahme 172 zum Einstecken des Montageabschnittes 166 vorhanden. An einem Fußbereich des Montageabschnittes 166 sind Formschlusskonturen 167, beispielsweise Keilschrägen oder dergleichen andere Formschlusskonturen, zum formschlüssigen Eingriff in Formschlussgegenkonturen 174 am Aufnahmekörper 171 vorgesehen. Zusätzlichen Halt erfährt der Kupplungsarm 165 an der Fahrzeug-Halterung 170 anhand einer Verriegelungseinrichtung 175. Die Verriegelungseinrichtung 175 umfasst beispielsweise einen Verriegelungskörper 176, insbesondere Kugeln, Bolzen oder dergleichen, die durch einen Betätigungskörper 177 betätigbar sind, wobei sie bei einer entsprechenden Betätigung in eine Verriegelungsaufnahme, insbesondere eine Rinne am Innenumfang der Steckaufnahme 172 in einen Verriegelungseingriff betätigbar sind. Der Betätigungskörper 177 ist bolzenartig und in Längsrichtung des Montageabschnittes 166 betätigbar, was durch einen Doppelpfeil angedeutet ist. Zur Betätigung des Betätigungskörpers 176 kann ein motorischer Antrieb oder wie vorliegend ein manueller Antrieb 178 vorgesehen sein, der durch ein Hand-Betätigungselement 179, insbesondere ein Handrad antreibbar ist. Wenn das Handbetätigungselement 179 gedreht wird, greift beispielsweise ein Ritzel in eine Verzahnung am Betätigungskörper 177 ein, um diesen entlang seiner Längserstreckungsrichtung zu verstellen, wodurch die Verriegelungskörper 176 durch nicht näher bezeichnete Durchtrittsöffnungen am Montageabschnitt 166 nach radial außen vor denselben betätigt werden, um in die Verriegelungsaufnahme 173 einzugreifen.

Eine derartige Verriegelungstechnik ist bekannt. Alternativ zu einer Steckhalterung kann aber auch eine feste Befestigung des Kupplungsarmes 176 am Zugfahrzeug Z2 vorgesehen sein oder aber auch Lagerung anhand einer schematisch dargestellten Lagerung 270, an der der Kupplungsarm 165 beispielsweise zwischen einer Gebrauchsstellung, bei der vor das Heck, insbesondere einen Stoßfänger, des Zugfahrzeugs Z2 vorsteht, und einer Nichtgebrauchsstellung, bei der er zumindest im Wesentlichen verborgen hinter und/oder unter eine Heckkontur des Zugfahrzeugs Z2 zurückverstellt ist, beispielsweise hinter einen Stoßfänger des Zugfahrzeugs Z2. Beispielsweise kann der Kupplungsarm 165 um eine Schwenkachse SA der Lagerung 270 schwenken.

Die Anhängerkupplung 180 ist als eine Zugkugelkupplung ausgestaltet. Als Kuppelelement 181 ist eine Kupplungsaufnahme 182 in die der Kugelkopf 162 und mithin das Kuppelelement 161 im Sinne eines Kugelgelenkes in an sich bekannter Weise eingreifen kann. Der Kugelkopf 162 ist in der Kupplungsaufnahme 182 gelagert, sodass die beiden Körper in einem Lagerbereich 196 in Eingriff miteinander sind.

Das Kuppelgegenelement 181 kann an dem Kuppelelement 161 um Gelenk-Drehachsen GZ, GX und GY schwenken, wobei die Gelenk-Drehachse GZ eine beim Fahrbetrieb im Wesentlichen vertikale Achse ist, während die beiden anderen Gelenk-Drehachsen GX und GY in Längsrichtung des Zugfahrzeugs Z2 und in Querrichtung dazu jeweils horizontal verlaufen. Diese Koordinaten bzw. Ausrichtung der Drehachsen können jedoch auch anders ausgestaltet sein.

Die Anhänger-Kupplung 180 umfasst beispielsweise eine Deichsel oder ist mit einem Montageabschnitt 183 an einer Deichsel angeordnet.

Zur Verriegelung der Anhänger-Kupplung 180 an der Zugfahrzeugkupplung 160 dient eine Verriegelungseinrichtung 185. Die Verriegelungseinrichtung 185 umfasst ein Verriegelungselement 187, beispielsweise eine Klemmbacke oder Schließbacke, die an einem Schwenklager 184 zwischen einer Offenstellung OP und einer Schließstellung LO verstellbar ist, wobei in der Offenstellung das Kuppelelement 161 aus dem Kuppelgegenelement 181 entfernbar ist, in der Schließstellung LO nicht. Zur Betätigung des Verriegelungselementes 187 dient ein Handbetätigungselement 186, beispielsweise mit einem Handgriff.

Wie bei der Kopplung der Anhänger-Kupplung an die Zugfahrzeugkupplung 160 ist auch bei der Anhänger-Kupplung 180 im Zusammenhang mit der Zugfahrzeugkupplung 160 eine Erfassung einer Schwenkbewegung der Anhänger-Kupplung 180 bezüglich der Zugfahrzeugkupplung 160 um die Gelenk-Drehachse GZ zu erfassen, wofür eine Sensorvorrichtung 110 vorgesehen ist.

Die Sensorvorrichtung 110 ist nachträglich an der Zugfahrzeugkupplung 160 ohne weiteres zu montieren, ohne dass die an sich kuppelnden Elemente, nämlich das Kuppelelement 161 und gegebenenfalls das Kuppelgegenelement 181 in irgendeiner Form modifiziert werden müssen. Insbesondere ist die Zugfahrzeugkupplung 160 im Bereich eines Zylinderabschnittes 163, insbesondere eines Schaftes, mit dem das Kuppelelement 161 am Kupplungsarm 165, insbesondere dessen oberem Armabschnitt 164, gehalten ist, nicht zu verändern. Dabei ist vorgesehen, dass die Sensorvorrichtung 110 an dem Endbereich des Kupplungsarmes 165, insbesondere am Armabschnitt 164 nahe beim Zylinderabschnitt 163 befestigt ist, so dass ein Mitnehmer 120 der Sensorvorrichtung 110 in Mitnahmekontakt mit der Anhänger-Kupplung 180 gelangen kann.

Der Mitnehmer 120 wird dabei an der Stirnseite des Kuppelgegenelementes 181, insbesondere einem Randbereich der Kupplungsaufnahme 182, dreh-mitgenommen, so dass er zusammen mit dem Kuppelgegenelement 181 dreht, wenn dieses um die Gelenk-Drehachse GZ verdreht wird, beispielsweise bei einer Kurvenfahrt eines Gespanns bestehend aus Zugfahrzeug Z2 und Anhänger A2, an dem die Anhänger-Kupplung 180 angeordnet ist.

Allerdings kann die Anhänger-Kupplung 180 nicht nur um die Gelenk-Drehachse GZ schwenken, was ja durch den Mitnehmer 120 bequem erfassbar ist und durch eine Anordnung des Mitnehmers 120 wie beispielsweise in Dokument EP 2 415 620 A1 beschrieben möglich ist, sondern auch um die Gelenk-Drehachsen GX und GY. Zur Lösung dieser Problematik ist eine sozusagen schwimmende oder mehrgelenkige Lagerung des Mitnehmers 120 bezüglich des Kuppelelementes 161, insbesondere bezüglich des Kupplungsarmes 165 vorgesehen.

Der Mitnehmer 120 weist eine der Stirnseite 188 der Kupplungsaufnahme 182 zugeordnete und/oder zugewandte Mitnahmefläche 121 auf, die insbesondere ringförmig ist. Der Mitnehmer 120 weist einen Mitnahmekörper 122 auf, an dem die Mitnahmefläche 121 stirnseitig vorgesehen ist. Eine von der Mitnahmefläche 121 abgewandte Seite des Mitnahmekörpers 122 oder des Mitnehmers 120 ist als ein Lagerabschnitt 123 ausgestaltet, der an einem Lagerkörper 130 drehbar gelagert und zusätzlich noch um Drehfreiheitsgrade DX und DY drehbar ist. Die Drehfreiheitsgrade DX und DY sind um Drehachsen vorgesehen, die zu den Gelenk-Drehachsen GX und GY parallel sind. Weiterhin ist es möglich oder denkbar, dass der Mitnehmer 120 eine lineare Verschieblichkeit bezüglich des Lagerkörpers 130 aufweist, beispielsweise um zu den Gelenk-Drehachsen GZ, GX und GY parallele Achsen. So kann beispielsweise ein linearer Bewegungsfreiheitsgrad LZ parallel zur Mitnahme-Drehachse M vorgesehen sein.

Der Mitnehmer 120 ist an dem Lagerkörper 130 drehbar um die Mitnahme-Drehachse M gelagert und quer zur Mitnahme-Drehachse M schwenkbar, nämlich mit den Drehfreiheitsgraden DX und DY. Somit kann der Mitnehmer 120 Schwenkbewegungen der Anhänger-Kupplung 180 um die Gelenk-Drehachsen GX und GY mitmachen, ohne dass der Mitnahmekontakt oder die Kopplung zwischen dem Mitnehmer 120 und dem Kuppelgegenelement 181 unterbrochen ist.

Der Lagerkörper 130 ist ringförmig. Der Lagerkörper 130 ist beispielsweise an dem Armabschnitt 164 befestigt, beispielsweise mit einer Schraube 141 einer Halteeinrichtung 140. Die Klemmschraube 141 verläuft beispielsweise radial zum Armabschnitt 164 und verklemmt den Lagerkörper 130 mit dem Kupplungsarm 165.

Zwischen dem Mitnehmer 120 und dem Lagerkörper 130 sind Kraftbeaufschlagungsmittel 150 vorgesehen, beispielsweise mit einer Federanordnung 151. Die Federanordnung 151 umfasst eine oder mehrere Federn 152, die am Lagerkörper 130 und am Mitnehmerkörper 122 oder Mitnehmer 120 abgestützt sind. Beispielsweise stützen sich die Federn 152 an einem Rand oder Stützabschnitt 124 des Mitnahmekörpers 122 ab. Der Stützabschnitt 124, beispielsweise eine Stufe, ein Rücksprung oder dergleichen, ist zwischen dem Lagerabschnitt 123 und der Mitnahmefläche 121 angeordnet.

Eine weitere Kraftbeaufschlagung des Mitnehmers 120 in Richtung der Anhängerkupplung 180 ist beispielsweise durch einen Magneten 153 gegeben, der am Mitnehmer 120 angeordnet ist. Der Magnet 153 (es können auch mehrere, insbesondere am Außenumfang des Mitnehmers 120 angeordnete Magnete vorgesehen sein) beaufschlagt den Mitnehmer 120 mit einer magnetischen Kraft in Richtung der Stirnseite 188 oder in Richtung des Kuppelgegenelements 181.

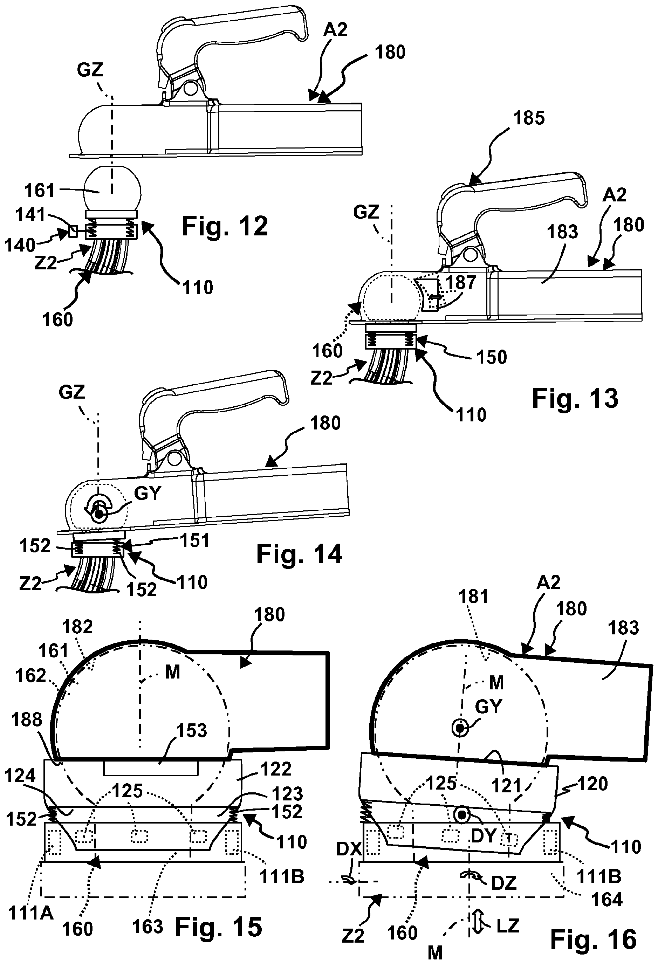

Der Ankupplungsvorgang der Anhänger-Kupplung 180 an die Zugfahrzeugkupplung 160 ist in den Figuren 12 und 13 verdeutlicht. Man erkennt, dass das Kuppelgegenelement 181 in Mitnahmekontakt mit dem Mitnehmer 120 beim Ankuppeln an die Zugfahrzeugkupplung 160 gelangt, d.h., dass beispielsweise die Federanordnung 151 komprimiert wird, wenn die Kupplungspfanne oder die Kupplungsaufnahme 182 auf den Kugelkopf 162 aufgesetzt wird.

Wenn dann das Kuppelgegenelement 181 der Anhängerkupplung 180 um die Mitnahme-Drehachse M dreht, nimmt sie den Mitnehmer 120 mit, so dass die Sensoranordnung 110 anhand des Sensors oder der Sensoren 111 eine jeweilige Drehwinkelstellung des Mitnehmers 120 relativ zum Lagerkörper 130 und somit relativ zum Zugfahrzeug Z2 bzw. der Zugfahrzeugkupplung 160 erfassen kann.

An dem Mitnehmer 120 sind nämlich Sensorgeber 125, insbesondere Magnete, angeordnet, insbesondere Ringanordnung mit mehreren, um den Außenumfang des Kupplungsarmes 165 angeordneten Sensorgebern oder Magneten 125, deren jeweilige Position durch mindestens einen Sensor 111 oder mehrere, beispielsweise zwei Sensoren 111a und 111b erfassbar ist.

Die Sensoren 111 erfassen also das Magnetfeld der Sensorgeber 125 und somit die Drehwinkelstellung des Kuppelgegenelementes 181 zum Kuppelelement 161.

Die Auswerteeinrichtung 112 weist eine Schnittstelle 115, insbesondere ein Funkmodul oder eine sonstige drahtlose Schnittstelle, zur Kommunikation mit dem Bordnetz N auf. Am Zugfahrzeug Z2, insbesondere im Bereich der Fahrzeug-Halterung 170, ist ein, insbesondere einen Bestandteil der Sensorvorrichtung 110 bildender oder zusammen mit der Sensorvorrichtung 110 ein System bildender, Empfänger 116 zum Empfangen von Sensorsignalen angeordnet, die die Drehwinkelstellung der Anhängerkupplung 180 relativ zu der Zugfahrzeugkupplung 160 um die Mitnahme-Drehachse M repräsentieren. Der Empfänger 116 kann beispielsweise eine Busschnittstelle und/oder eine Energieversorgungsschnittstelle oder dergleichen zur Ankopplung und/oder Verbindung an das Bordnetz N des Zugfahrzeugs Z2 aufweisen.

Zur lokalen Stromversorgung der Sensorvorrichtung 110 kann beispielsweise eine nicht dargestellte Batterie, ein Akku oder dergleichen vorhanden sein. Auch eine Stromversorgung anhand einer Fotozelle oder einer sonstigen zur elektrischen Energiegewinnung geeigneten Einrichtung ist ohne weiteres denkbar.

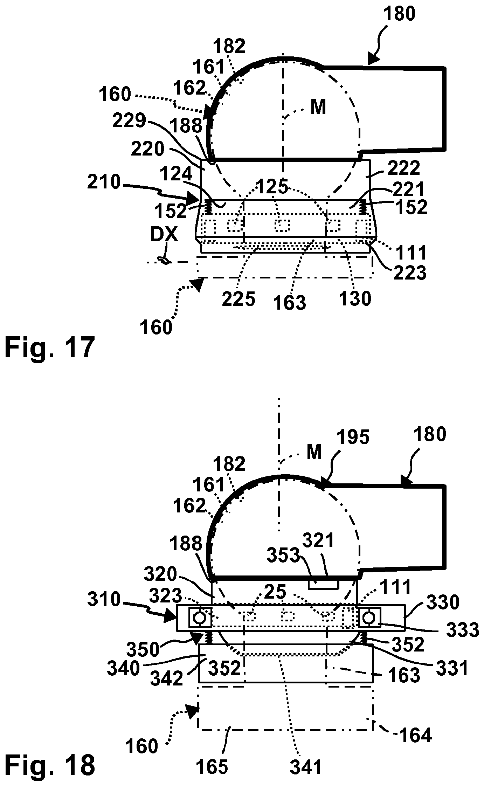

Bei dem Ausführungsbeispiel gemäß Figur 17 ist eine Sensorvorrichtung 210 dargestellt, die ähnliche Komponenten wie die bereits erläuterte Sensorvorrichtung 110 aufweist. Allerdings ist ein Mitnehmer 220 der Sensorvorrichtung 210 zumindest als eine Abdeckung, vorzugsweise als ein Schutzgehäuse 229, für den mindestens einen Sensor 111 und vorzugsweise auch den Lagerkörper 130 ausgestaltet.

Ein Mitnahmekörper 222 entspricht dabei grundsätzlich dem Mitnahmekörper 122, greift jedoch nicht in einen Innenraum des Lagerkörpers 130 ein, sondern weist einen Abdeckungsabschnitt 221 auf, in dem der Lagerkörper 130 zumindest partiell aufgenommen ist. Der Mitnahmekörper 222 kann optional an einer von der Mitnahmefläche 121 abgewandten Seite durch einen Deckel 223 verschlossen sein, der vorzugsweise ringförmig ist und eine Durchtrittsöffnung 225 für den Kupplungsarm 165, insbesondere dessen Zylinderabschnitt 163 und dem oberen Bereich des Armabschnitts 164 aufweisen kann. An der Durchtrittsöffnung 225 kann eine Dichtung, insbesondere ein Dichtring, eine Versiegelung mit beispielsweise Silikon oder einer sonstigen Fugenmasse, vorgesehen sein. Der Deckel 223 ist stirnseitig mit dem Mitnahmekörper 222 verbunden, beispielsweise verklebt, verschweißt oder dergleichen. Der Deckel 223 und der Mitnahmekörper 222 bilden insgesamt ein Schutzgehäuse 229 für den mindestens einen Sensor 111 und vorzugsweise den Lagerkörper 130.

Es versteht sich, dass das im Zusammenhang mit Figur 17 erläuterte Ausführungsbeispiel mit einem Schutzgehäuse auch bei dem Ausführungsbeispiel gemäß Figuren 10-16 ohne weiteres möglich ist, beispielsweise indem eine entsprechende Abdeckhaube oder dergleichen am Mitnehmer 120 angeordnet ist. Auch bei dem nachfolgend erläuterten Ausführungsbeispiel gemäß Figur 18 ist ein Schutzgehäuse prinzipiell möglich, jedoch aus Gründen der Übersichtlichkeit weggelassen.

Eine Sensorvorrichtung 310 ist zur Anordnung an der Zugfahrzeugkupplung 160 vorgesehen. Dazu hat sie eine Halteeinrichtung 340, beispielsweise einen Haltering 342, der am Zylinderabschnitt 163 und/oder Armabschnitt 164 der Zugfahrzeugkupplung 160 befestigt ist, beispielsweise verklemmt, verklebt oder dergleichen. Eine entsprechende Klemmschraube ist aus Gründen der Vereinfachung nicht in der Zeichnung dargestellt. Die Halteeinrichtung 340 weist eine Lageraufnahme 341 für einen Lagerabschnitt 331 eines Lagerkörpers 330 auf. Der Lagerabschnitt 331 und die Lageraufnahme 341 sind beispielsweise Abschnitte eines Kugelgelenk-Lagers, weisen also beispielsweise Kugelsegmente auf oder sind kugelsegmentartige ausgestaltet. Mithin ist die Lageraufnahme 341 beispielsweise in der Art einer Aufnahmeschale ausgestaltet. Somit kann der Lagerkörper 330 bezüglich des Halteringes 342 kugelgelenkig schwenken, sodass auch ein an dem Lagerkörper 330 um die Mitnahme-Drehachse M drehbar gelagerter Mitnehmer 320 Bewegungen der Anhänger-Kupplung 180 um die Gelenk-Drehachsen GX, GY sozusagen mitmachen kann, sodass seine Mitnahmefläche 321 in Mitnahme-Kontakt mit der Stirnseite 188 der Anhänger-Kupplung 180 bleibt.

Der Mitnehmer 320 ist an dem Lagerkörper 330 anhand eines Wälzlagers 333, insbesondere eines Kugellagers oder Rollenlagers, drehbar um die Mitnahme-Drehachse M gelagert. Die Reibung des Wälzlagers 333 ist vorzugsweise gering, sodass die Anhänger-Kupplung 180 den Mitnehmer 320 besonders leicht mitnehmen und drehen kann.

Der Sensor 111 ist an dem Lagerkörper 330 angeordnet, sodass Sensorgeber 25, insbesondere Magnete, an dem Mitnehmer 320, die in einem Innenraum des Lagerkörpers 330 angeordnet sind, zwar um die Mitnahme-Drehachse M drehen, jedoch nicht quer dazu schwenken oder in sonstiger Weise ihre Lage verändern.

Dadurch ist eine optimale Signalerfassung durch den Sensor 111 ohne weiteres realisierbar. Die Sensorgeber 25 sind beispielsweise an einem Lagerabschnitt 323 des Lagerkörpers 320 angeordnet, an dem das Wälzlager 333 abgestützt ist.

Als Kraftbeaufschlagungsmittel 350 dient beispielsweise eine Federanordnung mit Federn 352, die zwischen dem Lagerkörper 330 und der Halteeinrichtung 340 angeordnet sind und somit nicht nur den Lagerkörper 330, sondern auch den an dem Lagerkörper 330 um die Mitnahme-Drehachse M drehbar gelagerten Mitnehmer 320 in Richtung des Kuppelgegenelements 181 beaufschlagen. Als Kraftbeaufschlagungsmittel 350 kann auch alternativ oder ergänzend zu den Federn 352 ein Magnet oder eine Magnetanordnung 353 vorgesehen sein, die am Mitnehmer 320 angeordnet ist und diesen mit magnetischer Kraft in Richtung des Kuppelgegenelements 181 beaufschlagt.

Die Sensorvorrichtung 110 umfasst eine Auswerteeinrichtung 112, die beispielsweise am oder im Lagerkörper 130 angeordnet ist (Figur 10). Die Auswerteeinrichtung 112 umfasst beispielsweise einen Prozessor 13 sowie einen Speicher 14, in dem eines oder mehrere Programmmodule gespeichert sein können, deren Programmcode durch den Prozessor 13 zur Auswertung des Sensorsignals des Sensors 111 oder der Sensoren 111a, 111b vorgesehen ist.

An dieser Stelle sei aber erwähnt, dass die magnetischen Messprinzipien oder Sensor-Prinzipien der Sensorvorrichtung 10, 110 nicht die einzige Ausführungsform sind. Bei einer erfindungsgemäßen Sensorvorrichtung können beispielsweise induktive, kapazitive oder optische Sensoren, auch in Kombination, vorgesehen sein. So können beispielsweise anstelle der als Magnete ausgestalteten Sensorgeber 25, 125 optische Markierungen, insbesondere Striche oder dergleichen, vorgesehen sein, die durch einen optischen Sensor 11, 111 erfassbar sind. Auch eine kapazitive Erfassung ist ohne weiteres möglich, wenn beispielsweise entsprechende elektrische Felder durch die Sensorgeber bereitgestellt werden.

Anstelle der Sensorgeber 25, 125 können auch sonstige Sensorelemente oder Sensoren vorgesehen sein. Mithin kann also die sensorische Erfassung einer Relativposition eines Mitnehmers relativ zu einem Träger oder Lagerkörper auch durch mindestens einen Sensor realisiert sein, der am Mitnehmer angeordnet ist und somit relativ zum Lagerkörper oder Träger um die Mitnahme-Drehachse dreht.

Die Mitnehmer 120, 220, 320 können ganz oder teilweise aus einem elastischen Material, beispielsweise einem flexiblen Kunststoff, Gummi oder dergleichen bestehen. Insbesondere vorteilhaft ist eine elastische Nachgiebigkeit im Bereich der Mitnahmefläche 21.

Bei den Sensorvorrichtung 210, 310 kann die bereits erläuterte Auswerteeinrichtung 112 für den jeweiligen Sensor 111 vorgesehen sein.

Eine Sensorvorrichtung 610 ist wie die Sensorvorrichtung 10 geeignet, von dem Kuppelgegenelement 81 der Anhänger-Kupplung 80 um die Mitnahme-Drehachse M mitgenommen zu werden.

Die Sensorvorrichtung 610 umfasst eine Halteeinrichtung 640, die in der Art der Halteeinrichtung 40 an dem Stützkörper 72 der Zugfahrzeugkupplung 60 befestigt werden kann.

Die Halteeinrichtung 640 weist eine Halteplatte 641 auf, an der eine Haltepartie 645 zur Befestigung eines Lagerkörpers 630 vorgesehen ist. Von der Haltepartie 645 erstrecken sich Befestigungspartien 645A, 645B weg, die beispielsweise stufenförmig ausgestaltet sind. Beispielsweise verlaufen die Partien 645, 645A und 645B jeweils stufenförmig zueinander. An den Befestigungspartien 645A, 645B sind Haltevorsprünge 642 vorgesehen, die z.B. zu einer Verschraubung mit dem Stützkörper 72 der Zugfahrzeugkupplung 60 anhand beispielsweise der Schrauben 44 geeignet sind.

Der Lagerkörper 630 dient zur Lagerung des Mitnehmers 620 um die Mitnahme-Drehachse M. Beispielsweise ist ein oberes Drehlager 33 an einem von der Halteplatte 641 abgewandten Endbereich des Lagerkörpers 630 angeordnet, insbesondere an einem Flanschvorsprung 31. Zu dem Lager 33 beabstandet bezüglich der Mitnahme-Drehachse M ist ein weiteres Lager 34 vorgesehen. Die Lager 33, 34 bilden eine Lageranordnung 32, die den Mitnehmer 20 um die Mitnahme-Drehachse M bezüglich des Lagerkörpers 630 drehbar lagern. Das Drehlager 34 ist an einem Stützkörper 39 angeordnet, der sich seinerseits am Lagerkörper 630 abstützt.

Der Mitnehmer 620 ähnelt dem Mitnehmer 20 insoweit, als er eine Umfangswand 622 sowie eine Stirnwand 621A aufweist und beispielsweise im Wesentlichen zylindrisch oder konisch ist, insbesondere pilzförmig ist. Die Stirnwand 621A ist für eine Drehmitnahme durch das Kuppelgegenelement 81 vorgesehen.

Der Mitnehmer 620 bildet ein Schutzgehäuse 29 mit einem geschützten Innenraum 29A, in welchem die elektronischen Komponenten der Sensorvorrichtung 610 angeordnet sind, insbesondere der bereits erläuterte Sensor 11. Dieser befindet sich im Innenraum des Sensorträgers 24, an welchem mindestens ein Sensorgeber 25, z.B. ein Magnet, angeordnet ist, um den Sensor 11 zu betätigen.

Der Lagerkörper 630 weist einen Kanal 637 auf, der mit einer Durchtrittsöffnung 646 der Halteplatte 641 kommuniziert, so dass durch diese beiden Komponenten eine Leitungsanordnung VX zur Auswerteeinrichtung 12 und dem Sensor 11 geführt werden kann.

An der Stirnwand 621A ist ein Magnet 653 in der Art des Magneten 53 angeordnet. Der Magnet 653 ist in einer Abschirmung 654 angeordnet, die beispielsweise eine Bodenwand 654A sowie eine Umfangswand 654B aufweist. Die Bodenwand 654A ist von der Mitnahme-Drehachse M rechtwinkelig durchsetzt, während die Umfangswand 654B sich um die Mitnahme-Drehachse M erstreckt. Somit ist der Magnet 653 bezüglich des Sensors 11 abgeschirmt und kann diesen nicht beeinflussen.

Ähnlich wie bei Sensorvorrichtung 10 ist auch bei der Sensorvorrichtung 610 eine Beweglichkeit der Halteeinrichtung 640 relativ zum Stützkörper 72 bzw. der Zugfahrzeugkupplung 60 realisiert. Anstelle der Schrauben 44 sind jedoch Lagerkörper 644 vorgesehen, die Durchtrittsöffnungen 643 der Halteeinrichtung 640 an den Haltevorsprüngen 642 durchdringen und mit Befestigungsabschnitten 644C mit der Zugfahrzeugkupplung 60, insbesondere dem Stützkörper 72 verbunden sind, beispielsweise verschraubt, verklebt oder verschweißt. Beispielsweise können an den Befestigungsabschnitten 644C Schraubgewinde vorgesehen sein. Die Lagerkörper 644 sind vorteilhaft bolzenartig ausgestaltet.

Die Lagerkörper 644 bilden Bestandteile von Lagereinrichtungen 655, die die Halteeinrichtung 640 bezüglich des Stützkörpers 72 sowohl schwenkbar als auch verschieblich lagern. Die Lagereinrichtungen 655 umfassen nämlich jeweils ein Schwenklager 656, insbesondere ein mehrachsig lagerndes Schwenklager, nämlich ein Kugellager, sowie ein Schiebelager 657. Beispielsweise sind in den Durchtrittsöffnungen 643, die man insoweit auch als Lageraufnahmen bezeichnen kann, Lagerkörper 658 aufgenommen. An den Lagerkörpern 658 sind Lageraufnahmen 656A des Schwenklagers 656 vorgesehen. In den Lageraufnahmen 656A ist ein Lagerkörper 659 in der Art einer Kugel oder Teil-Kugel aufgenommen. Der Lagerkörper 656 kann in der Lageraufnahme 656A mehrachsig schwenken, beispielsweise um die Achsen SX und/oder SY oder jeweils dazu parallele Achsen.

In dem Lagerkörper 659 ist eine Lageraufnahme 657A, nämlich eine Schiebelageraufnahme, für den Lagerkörper 644 vorgesehen. Der Lagerkörper 644 ist also in der Lageraufnahme 657A entlang einer Verschiebeachse ZZ längs verschieblich, was durch einen Doppelpfeil PZ angedeutet ist. Die Schwenkbarkeit des Lagerkörpers 644 bezüglich der Lageraufnahmen 655A oder die Schwenkbarkeit des Lagerkörpers 658 um den Lagerkörper 659, so dass nämlich die Halteeinrichtung 640 bezüglich des Lagerkörpers 644 schwenken kann, ist durch gestrichelte Linien angedeutet. Somit kann also die Halteeinrichtung 640, insbesondere die Halteplatte 641, sowohl um die Achsrichtung PZ bezüglich des jeweiligen Lagerkörpers 644 axial verschoben werden, als auch um zueinander winkelige Schwenkachsen, die im Schnittpunkt der Mittellängsachse des Lagerkörpers 644 mit der Mittelebene der Halteplatte 641 im Bereich des jeweiligen Haltevorsprungs 642 liegen, geschwenkt werden.

In der Zeichnung ist dargestellt, wie die Halteplatte 641 aufgrund der Beweglichkeit an den Schwenklagern 656 und Schiebelagern 657 ausgelenkt werden kann. Allerdings ist die Auslenkung in der Zeichnung überhöht dargestellt. In der Praxis reicht eine geringfügige Auslenkung von beispielsweise wenigen Grad aus, um dem Kuppelgegenelement 81 ein eine Auslenkung des Mitnehmers 620 aus seiner Mittellage für ein Aufgleiten auf die Stirnwand 621A zu ermöglichen oder zu erleichtern.

Zur Verbesserung der Beweglichkeit der Halteplatte 641 bezüglich der ortsfesten Komponenten der Zugfahrzeugkupplung 60, beispielsweise des Stützkörpers 72, ist vorteilhaft vorgesehen, dass die Lagerkörper 658 in den Durchtrittsöffnungen 643 mit einem Bewegungsspiel quer der Verschiebeachse ZZ oder Längsachse der Schiebelager 657 aufgenommen sind. Beispielsweise steht ein Lagerbereich 643A der Halteplatte 641 im Bereich der jeweiligen Durchtrittsöffnung 643 in eine Lageraufnahme 658A, beispielsweise eine Lagernut, am Lagerkörper 658 vor. Der Lagerbereich 643A kann beispielsweise kreisrund sein, aber auch andere Konturen umfassen, beispielsweise ein Langloch. Demensprechend kann beispielsweise auch ein ovaler oder länglicher Lagerbereich 643B vorgesehen sein, der schematisch angedeutet ist. Die Lageraufnahme 658A kann beispielsweise eine Umfangsnut am Lagerkörper 658 sein. Somit ist der Lagerkörper 658 quer zu der Bewegungsrichtung, die durch den Doppelpfeil PZ angedeutet ist, in der Durchtrittsöffnung 643 beweglich aufgenommen. Dadurch können vorteilhaft Verspannungen vermieden werden.

Alternativ oder ergänzend wäre es auch möglich, beispielsweise den Lagerkörper 658 anhand eines Elastomers mit der Halteplatte 641 zu verbinden, sodass der Lagerkörper 658 sozusagen schwimmend in der Halteplatte 641 aufgenommen ist.

Die Halteplatte 641 ist zudem bezüglich der Lagerkörper 644 kraftbeaufschlagt, nämlich durch ein Kraftbeaufschlagungsmittel 650. Das Kraftbeaufschlagungsmittel 650 umfasst eine Federanordnung 651 mit Federn 652. Die Federn 652 stützen sich jeweils an einem Kopf 644A eines Lagerkörpers 644 einerseits und andererseits an einer bezüglich der Halteplatte 641 oder der Halteeinrichtung 640 ortsfesten oder unverschieblichen Komponente, beispielsweise einer der Lagerkörper 658 oder 659 ab. Die Federn 652 sind von einem Lagerabschnitt 644B eines jeweiligen Lagerkörpers 644 durchdrungen. Der Lagerabschnitt 644B ist in der Lageraufnahme 657A längsverschieblich aufgenommen.

Der Mitnehmer 620 ist mehrteilig aufgebaut. Er weist einen Mitnehmer-Träger 667 auf, der von seiner Grundkontur dem Mitnehmer 20 ähnelt, nämlich eine Stirnwand 668 sowie die Umfangswand 622 aufweist. Der Mitnehmer-Träger bildet das Schutzgehäuse für unter anderem den Sensor 11 und die Auswerteeinrichtung 12 und ist anhand der Lageranordnung 32 am Lagerkörper 630 drehbar gelagert.

An dem Mitnehmer-Träger 667 ist ein Mitnahmekörper 660 lösbar befestigt, beispielsweise verklebt, verschraubt oder dergleichen. Der Mitnahmekörper 660 bildet sozusagen das Verschleißteil, das leicht auswechselbar ist, während der Mitnehmer-Träger 667 dauerhaft am Lagerkörper 630 bleibt.

Beispielsweise ist eine Unterseite 666 des Mitnahmekörpers 660 mit der Stirnwand 668 verklebt und/oder liegt plan an dieser an. Zur lösbaren Befestigung kann beispielsweise eine Schraubanordnung mit Schrauben 665 vorgesehen sein, die einen Grundkörper 661 des Mitnahmekörpers 660 an Durchtrittsöffnungen 664 durchdringen und in Schraubaufnahmen 669 des Mitnehmer-Trägers 667 eingeschraubt sind.

Zentral bezüglich der Mitnahme-Drehachse M weist der Mitnahmekörper 660 eine Aufnahme 663 für den Magneten 653 auf. Beispielsweise ist in der Aufnahme 663 die Abschirmung 654 aufgenommen. Am radialen Außenumfang der Aufnahme 663 erstrecken sich mehrere Aussparungen 662, die beispielsweise dazu dienen, dass der Mitnahmekörper 660 an seinem Randbereich leichter komprimierbar ist, was ein aufgleiten des Kuppelgegenelements 81 auf den Mitnehmer 620 erleichtern kann. Insbesondere ist der um die Aussparungen 662 sich erstreckende Randbereich des Mitnahmekörpers 660 schräg flach geneigt und weist die Schräge 622A auf. Die Aussparungen 662 können aber auch dazu dienen, dass der Mitnahmekörper 660 besonders leicht ist oder wenig Material für ihn notwendig ist. Die Aussparungen 662 können aber auch dazu dienen, dass der Mitnahmekörper 660 formstabil herstellbar ist.

Der Magnet 663 und/oder die Abschirmung 654 können in das Material des Mitnahmekörpers 660 eingeklebt, eingesetzt oder eingeschraubt sein. Es ist aber auch möglich, den Magneten 653 und/oder die Abschirmung 654 mit dem Material des Mitnahmekörpers 660 zu umspritzen.

Die Stirnwand 621A oder Stirnseite des Mitnehmers 620 ist als eine Reibschlussfläche 681 ausgestaltet und dient zum reibschlüssigen Mitnahmekontakt des Mitnehmers 620 mit dem Kuppelgegenelement 81. Nun wäre es möglich, die Reibschlussfläche 681 unmittelbar an einer freien, vor die Aufnahme 663 vorstehenden Stirnseite oder Flachseite 653A des Magneten 653 vorzusehen, beispielsweise indem die nachfolgend noch erläuterten Partikel 683 anhand einer Verklebung oder sonstigen Laminierung mit dieser freien Stirnseite 653A fest verbunden sind.

Vorliegend ist jedoch ein separater Reibschlusskörper 680 vorgesehen. Der Reibschlusskörper 680 ist beispielsweise plattenartig oder folienartig und an der freien Stirnseite 653A des Magneten 653 fest angeordnet, beispielsweise verklebt. Der Reibschlusskörper 680 kann aber auch von einem Material des Mitnahmekörpers 660 gebildet sein, welches den Magneten 653 umschließt und in den die Partikel 683 unmittelbar eingebettet sind.

Der Reibschlusskörper 680 weist an seiner vom Magnet 653 abgewandten Seite die Reibschlussfläche 681 auf. Die Partikel 683 stehen vor eine Tragoberfläche 682 des Reibschlusskörpers 680 vor. Beispielsweise ist der Reibschlusskörper 680 anhand einer Klebeschicht 686 mit der Stirnseite 653A des Magneten 653 verklebt.

Der Reibschlusskörper 680 weist einen Grundkörper oder eine Grundschicht 685 auf, die an einander entgegengesetzten Seiten einerseits die Klebeschicht 686 sowie andererseits eine Tragschicht 684 für die Partikel 683 aufweist. Die Tragschicht 684, die man auch als eine Bindeschicht oder Klebeschicht bezeichnen kann, trägt die Partikel 683. Diese sind in die Tragschicht 684 sozusagen eingebettet und stehen frei vor dieselbe vor.

Die Partikel 683 stehen beispielsweise in der Art von Pyramiden vor die Tragoberfläche 682 vor. Somit stehen ihre Spitzen 687, zum Beispiel Pyramidenspitzen, dornartig vor die Tragoberfläche 682 vor, so dass sie dornartig in die Stirnseite 88 des Kuppelgegenelements 81, mithin also die Mitnahmefläche oder Reibschlussfläche des Kuppelgegenelements 81, eindringen können. Von den Spitzen 687 verlaufen die Seitenflächen der Partikel 683 zur Tragoberfläche 682 hin, Wobei zwischen den jeweiligen Seitenflächen Kanten 688 ausgebildet sind.

Eine Zentralfläche 690 der Reibschlussfläche 681 ist ohne Partikel 683. Dort steht die Tragoberfläche 682 frei. Die Zentralfläche 690 wird von der Mitnahme-Drehachse M durchsetzt. Von der Zentralfläche 690 bzw. der Mitnahme-Drehachse M verlaufen die Partikel 683 entlang von Strahlen 689, sind also regelmäßig angeordnet. Die Spitzen 687 bzw. die freien Endbereiche der Partikel 683 stehen etwa gleich weit vor die Tragoberfläche 682 vor. Somit "durchstoßen" die Spitzen 687 eine Umhüllende 691 nicht. Die Umhüllende 691 ist eine Planfläche oder ebene Fläche, entsprechend der planen oder ebenen Oberfläche der Stirnseite 88 des Kuppelgegenelements 81.

Allein durch die strahlenförmige Anordnung der Partikel 683 an der Tragoberfläche 682 ergibt sich eine höhere Konzentration von Partikeln 683 nahe bei der Zentralfläche 690 als am radial äußeren Randbereich des Reibschlusskörpers 680 bzw. der Reibschlussfläche 681. Somit wird beispielsweise Fett oder dergleichen anderer Schmutz in die weiten Zwischenräume zwischen die dornartigen Partikel 683 hineinverdrängt, so dass deren Spitzen 687 vor die in der Zeichnung nicht dargestellte Schmutzschicht oder Fettschicht vorstehen und den Reibschluss mit dem Kuppelgegenelement 81 herstellen.

Die Partikel 683 sind ringförmig oder kreisringförmig um die Mitnahme-Drehachse M angeordnet. Selbstverständlich wäre auch eine chaotische Anordnung oder auch eine Anordnung mit unterschiedlichen Verteilungen oder Feldern möglich. Auch der Winkelabstand zwischen den Partikeln 683 kann am radialen äußeren Umfang kleiner als nahe bei der Zentralfläche 690 sein, anders als in der Zeichnung dargestellt.

Bei den Partikeln 683 handelt es sich vorzugsweise um Korund, Quarz, Gesteinspartikel oder dergleichen anderes hartes Material mit scharfen Bruchkanten und jedenfalls Spitzen.

Die Tragschicht 684 enthält beispielsweise Leim und/oder Epoxidharz, um die Partikel 683 an die Grundschicht 685 anzukleben oder anzubinden. Die Tragschicht 684 und/oder die Grundschicht 685 und/oder die Klebeschicht 686 können elastische Komponenten sein und/oder aus einem elastischen Material bestehen oder ein elastisches Material enthalten.

Zum besseren Halt von Partikeln an einer Reibschlussfläche oder Tragoberfläche kann auch eine Deckschicht 692 vorgesehen sein, beispielsweise aus einem Wachs oder dergleichen. Vorteilhaft ist es aber, wenn die Kanten 688 zumindest teilweise, jedenfalls aber die Pyramidenspitzen oder Spitzen 687, der Partikel 683 vor die Deckschicht 692 vorstehen. Die Deckschicht 692 besteht zweckmäßigerweise aus einem weicheren Material als die Partikel 683, so dass sie den Kontakt mit dem Kuppelgegenelement 81 herstellen können.

Die Verteilung und/oder Anordnung von Partikeln an einer Reibschlussfläche kann auch anders als beim vorgenannten Ausführungsbeispiel ausgestaltet sein, was anhand von Reibschlusskörpern 780, 880 deutlicher werden soll. Diese entsprechen im Wesentlichen dem Reibschlusskörper 680, d.h. beispielsweise dass eine Tragschicht, eine Grundschicht und eine Klebeschicht vorhanden sind. Die Partikel 683 der Reibschlussflächen 781, 881 der Reibschlusskörper 780, 880 könnte aber auch direkt am Mitnahmekörper 660 oder den Magneten 653 vorgesehen sein.

Die Partikel 683 sind beim Reibschlusskörper 780 beispielsweise in Ringen 793, 794, 795, die konzentrisch um einen Mittelpunkt des kreisrunden Reibschlusskörpers 780 verlaufen, angeordnet. Zwischen den Ringen 793-795 liegt die Tragoberfläche 782 frei, in welche in den Ringen 793, 794, 795 die Partikel 683 eingebettet sind. Auch das Zentrum 790 oder die Zentralfläche 790 des Reibschlusskörpers 780 ist ohne Partikel 683, so dass dort die Tragoberfläche 782 für eine unmittelbare Reibschussmitnahme des Kuppelgegenelements 81 freiliegt.

Bei dem Reibschlusskörper 880 sind die Partikel 683 in Winkelsegmenten 893 angeordnet, die beispielsweise strahlenförmig um die Mitnahme-Drehachse M verlaufen. Zwischen den Winkelsegmenten 893, wo sich die Partikel 83 der Reibschlussfläche 881 des Reibschlusskörpers 880 befinden, sind ebenfalls Winkelsegmente der Tragoberfläche 882 freiliegend, also ohne Partikel.

Eine Sensorvorrichtung 410 weist sozusagen eine zentrale Lagerung für einen Mitnehmer 420 auf, der im Wesentlichen den Mitnehmer 620 gleicht. Der Mitnehmer 420 weist also ebenso einen zum eigentlichen Reibschluss bzw. Mitnahmekontakt mit dem Kuppelgegenelement 81 vorgesehenen Mitnahmekörper 460 auf, der dem Mitnahmekörper 660 gleicht, sowie einen Mitnehmer-Träger 467, der entsprechend dem Mitnehmer-Träger 667 den Mitnahmekörper 460 trägt.

Gleiche und gleichartige Komponenten, unter anderem der Magnet 653, tragen also dieselben Bezugsziffern, die bereits erläutert worden sind. Dementsprechend ist also der Mitnahme-Träger 467 anhand der Drehlager 33, 34, die bezüglich der Mitnahme-Drehachse M einen Längsabstand haben, am Lagerkörper 430 gelagert, der zur Abstützung des in der Zeichnung unteren Drehlagers 34 zudem noch einen Stützkörper 39 aufweist, der vom Lagerkörper 430 durchdrungen ist. Anstelle des Stützkörpers 39 kann selbstverständlich auch ein Flanschvorsprung oder dergleichen vorgesehen sein, der vor den Lagerkörper 430 radial vorsteht.

Das Schutzgehäuse, welches durch den Mitnehmer-Träger 667 gebildet ist, ist durch eine Bodenwand 23 abgedeckt, die vom Lagerkörper 430 durchdrungen ist.

Der Lagerkörper 430 ist an einer Halteeinrichtung 440 abgestützt, die mit dem Stützkörper 72 verbunden ist, nämlich anhand von Schrauben 444, die in den Stützkörper 72 eingeschraubt sind und deren Köpfe 444A sich an einer Halteplatte 441 der Halteeinrichtung 440 abstützen. Die Halteplatte 441 ist bezüglich der Zugfahrzeug-Kopplung 60, insbesondere deren Stützkörper 72 ortsfest. Die Beweglichkeit des Mitnehmers 420 wird durch eine Lagereinrichtung 455 gewährleistet, mit der der Lagerkörper 430 an der Halteeinrichtung 440, insbesondere der Halteplatte 441, beweglich gelagert ist, nämlich schiebebeweglich mit einem linearen Bewegungsfreiheitsgrad LZ parallel zur Mitnahme-Drehachse M, sowie quer zur Mitnahme-Drehachse M noch um einen oder mehrere Drehbewegungsfreiheitsgrade, nämlich um Achsen SY und SX.

Die Lagereinrichtung 455 weist dazu ein als Kugellager ausgestaltetes Mehrgelenk-Schwenklager 456 auf. Beispielsweise ist dazu ein Lagerkörper 459, der an seinem Außenumfang kugelig ist oder kugelsegmentförmig ist, in einem Lagerkörper 458, der bezüglich der Halteeinrichtung 440 ortsfest ist, beispielsweise an der Halteplatte 441 angeordnet ist, schwenkbeweglich gelagert, nämlich in einer Lageraufnahme 456A.

Der Lagerkörper 459 seinerseits weist eine Schiebelageraufnahme 457A auf, die bei einem Schiebelager 457 vorgesehen ist. Die Lageraufnahme 457A wird von einem Lagerabschnitt 433 des Lagerkörpers 430 durchdrungen, der vor den Mitnehmer 420 vorsteht. Der Lagerabschnitt 433 kann also in der Lageraufnahme 457A in Bezug auf die Achse GZ oder die Mitnahme-Drehachse M linear verschoben werden und quer zu dieser Achse anhand des Schwenklagers 456 einachsig oder mehrachsig schwenken. Die lineare Verschieblichkeit ist in gestrichelten Linien in der Querschnittsansicht dargestellt. Die Schwenkbeweglichkeit ist in der Seitenansicht ebenfalls mit gestrichelten Linien angedeutet, jedoch zeichnerisch besonders stark überhöht.

Die Reibschlussfläche 681 kann selbstverständlich auch anders ausgestaltet sein, so dass dort beispielsweise einer der Reibschlusskörper 780 oder 880 angeordnet ist.

Selbstverständlich ist auch bei der Sensorvorrichtung 10 an der Stirnwand 21A einer der Reibschlusskörper 680, 780 oder 880 ohne weiteres anordenbar, beispielsweise anklebbar oder dergleichen. Ferner können in die Stirnwand 21A die Partikel 683 auch unmittelbar eingebettet sein. Beispielsweise besteht ja der Mitnehmer 20 aus einem Kunststoffmaterial, insbesondere einem elastischen Kunststoffmaterial, insbesondere einem Gummimaterial, in welches man ohne weiteres Partikel, insbesondere Korund, Glassplitter oder dergleichen andere scharfkantige Partikel beim Fertigungsprozess einstreuen kann.

Das Prinzip mit Partikeln an Reibschlussflächen ist ohne weiteres auch bei den Sensorvorrichtungen 110, 210 oder 310 realisierbar, wenn beispielsweise die Mitnahmeflächen 121, 321 mit Partikeln 683 versehen sind.

An diesen Mitnahmeflächen können ohne weiteres Vorsprünge oder Mitnahmevorsprünge oder Formschlussvorsprünge vorgesehen sein, ähnlich wie beim nachfolgend erläuterten Konzept:
Eine Sensorvorrichtung 510 für eine Zugfahrzeugkupplung 560 ist beispielsweise unmittelbar an deren Kuppelelement 561, beispielsweise einer Kupplungskugel 562, angeordnet. Der Mitnehmer 520 ist ringförmig und erstreckt sich nahe des Äquators der Kugel 562, jedoch nicht auf dem Äquator der Kugel. Der ringförmige Mitnehmer 620 kann sich um eine Mitnahme-Drehachse M drehen, um die er an dem Kuppelelement 561 drehbar gelagert ist. Der Mitnehmer 520 ist nämlich in einer Lageraufnahme 518, die sich am radialen Außenumfang, nahe bei der Kugeloberfläche der Kugel 562, über deren gesamtem Außenumfang erstreckt, drehbar gelagert. Selbstverständlich wäre auch eine teilringförmige Konfiguration eines Mitnehmers der nachfolgend beschriebenen Art möglich.

Weiterhin weist das Kuppelelement 561 eine Sensoraufnahme 517 auf, in der eine Auswerteeinrichtung 512 sowie ein Sensor 511 zur Erfassung von Signalen von Sensorgebern 25, beispielsweise Magneten, angeordnet ist. Der Mitnehmer 520 weist einen Mitnahmekörper 527 auf, der an einem Mitnehmer-Träger 524 befestigt ist. Der Mitnehmer-Träger 524 weist einen oder mehrere Sensorgeber 25 auf, die ringförmig angeordnet sind und sich um die Mitnahme-Drehachse M erstrecken. Wenn also der Mitnehmer-Träger 524 um die Mitnahme-Drehachse M dreht, drehen die Magnete oder sonstigen Sensorgeber am Sensor 511 vorbei, so dass dieser eine jeweilige Drehwinkelstellung erfassen kann.

Zum besseren Halt der Auswerteeinrichtung 512 in der Sensoraufnahme 527 ist diese beispielsweise in eine haltende Masse 519 oder einen dergleichen anderen haltenden Körper eingebettet. Auch dieser Körper weist einen Abschnitt der Lagernut oder Lageraufnahme 518 auf.

Der Mitnehmer 520, insbesondere dessen Mitnahmekörper 660, weist an seinem radialen Außenumfang 522 mehrere Mitnahmevorsprünge 521 auf, zwischen denen Abstände oder Zwischenräume 523 angeordnet sind. In die Abstände 523 hinein können sich die Mitnahmevorsprünge 521 hinein verdrängen lassen, wenn ein radial von außen kommender Druck, nämlich durch beispielsweise die Anhänger-Kupplung 180 oder deren Kuppelgegenelement 181, auf einen Mitnahmevorsprung 521 einwirken.

An den Mitnahmevorsprüngen 521 sind jeweils mehrere Partikel 683, beispielsweise Gesteinspartikel, Korund, Diamant oder dergleichen, angeordnet, deren Spitzen nach radial außen vor den jeweiligen Mitnahmevorsprung 521 vorstehen und dementsprechend einen reibschlüssigen Kontakt am Kuppelgegenelement 181 herstellen können, wenn die Anhänger-Kupplung 180 an die Zugfahrzeug-Kupplung 560 angekuppelt ist.

Das Kuppelelement 561 ist an einem Kupplungsarm 565 angeordnet und kann anhand einer Lagerung 570 zwischen einer Gebrauchsstellung GS und einer Nichtgebrauchsstellung NG verstellt werden, beispielsweise einachsig oder mehrachsig verschwenkt und/oder linear verschoben oder dergleichen. Selbstverständlich ist es möglich, den Kupplungsarm 565 in der Gebrauchsstellung GS und/oder der Nichtgebrauchsstellung NG durch eine nicht dargestellte Verriegelungseinrichtung zu verriegeln und/oder zwischen den beiden Stellungen manuell oder motorisch zu verstellen. Ein hierfür geeigneter Antriebsmotor ist aus Gründen der Vereinfachung nicht dargestellt.

In der Nichtgebrauchsstellung NG ist der Kupplungsarm 565 hinter einer Heckkontur, beispielsweise einer Heckschürze, eines Zugfahrzeugs Z3 verborgen, an dem die Zugfahrzeugkupplung 560 angeordnet ist.

## Patentansprüche

1. Sensorvorrichtung für eine Zugfahrzeugkupplung (60) oder als Bestandteil einer Zugfahrzeugkupplung (60), insbesondere Sattelkupplung (60A), mit der ein Anhängerfahrzeug (A), insbesondere ein Sattelauflieger, an ein Zugfahrzeug (Z), insbesondere ein Lastkraftwagen, ankuppelbar ist, wobei die Zugfahrzeugkupplung (60) ein Kuppelelement (61) zur lösbaren Kupplung eines Kuppelgegenelements (81), insbesondere eines Sattelzapfens (82), aufweist, wobei das Kuppelelement (61) an dem Zugfahrzeug (Z) und das Kuppelgegenelement (81) an dem Anhängerfahrzeug (A) befestigt oder befestigbar sind und im aneinander gekuppelten Zustand ein Gelenk bildend um mindestens eine Gelenk-Drehachse (GZ) relativ zueinander drehbar sind, wobei die Sensorvorrichtung (10) einen an einem Lagerkörper (30) um eine Mitnahme-Drehachse (M) drehbar gelagerten Mitnehmer (20) zur Erfassung einer Drehung des Kuppelgegenelements (81) relativ zu dem Kuppelelement (61) um die mindestens eine Gelenk-Drehachse (GZ) aufweist, wobei der Mitnehmer (20) von dem Kuppelgegenelement (81) bei einer Drehung um die mindestens eine Gelenk-Drehachse (GZ) um die Mitnahme-Drehachse (M) dreh-mitnehmbar ist und die Sensorvorrichtung (10) mindestens einen Sensor (11) zur Erfassung einer jeweiligen Drehposition des Mitnehmers (20) relativ zu dem Lagerkörper (30) bezüglich der Mitnahme-Drehachse (M) aufweist, wobei der Mitnehmer (20) außerhalb eines Lagerbereichs (96) des Gelenks, in dem das Kuppelelement (61) und das Kuppelgegenelement in lagerndem Eingriff miteinander sind, angeordnet ist, wobei der mindestens eine Sensor (11) in einem Innenraum des Mitnehmers (20) angeordnet ist und/oder der Mitnehmer (20) ein Schutzgehäuse (29) für den mindestens einen Sensor (11) bildet, und wobei der Mitnehmer (20) bezüglich des Kuppelelements (61) zur Bereitstellung oder Aufrechterhaltung einer Mitnahmekopplung zu dem Kuppelgegenelement (81) um mindestens einen von der Drehbarkeit um die Mitnahme-Drehachse (M) verschiedenen Bewegungsfreiheitsgrad, insbesondere Drehfreiheitsgrad (DX, DY), beweglich gelagert ist, **dadurch gekennzeichnet, dass** sie eine Halteeinrichtung (40) zu einem bezüglich der Mitnahme-Drehachse (M) drehfesten Halten des Lagerkörpers (30) an dem Kuppelelement (61) aufweist und die Halteeinrichtung (40) einen Träger (47) für den Lagerkörper (30) umfasst, der an dem Kuppelelement (61) oder bezüglich des Kuppelelements (61) beweglich gelagert ist.

2. Sensorvorrichtung nach Anspruch 1, **dadurch gekennzeichnet, dass** der Lagerkörper (30) an dem Kuppelelement (61) des Zugfahrzeugs angeordnet oder anordenbar oder durch das Kuppelelement (61) gebildet ist und/oder dass sie zu einer Anordnung in einem bei der Kupplungsaufnahme (70) vorhandenen, insbesondere unterhalb der Kupplungsaufnahme (70) oder einer neben einer Stützplatte der Zugfahrzeugkupplung (60) vorgesehenen, Aufnahmeraum (67), insbesondere einer Kavität, der Zugfahrzeugkupplung (60) ausgestaltet und/oder vorgesehen ist.

3. Sensorvorrichtung nach Anspruch 1 oder 2, **dadurch gekennzeichnet, dass** sie eine Halteeinrichtung (40) zum Halten des Mitnehmers (20) an einer Stirnseite des Sattelzapfens (82) und/oder zur Befestigung an einander entgegengesetzten Seiten der Kupplungsaufnahme (70) aufweist und/oder dass das Kuppelelement (61) eine Kupplungsaufnahme (70), insbesondere ein Kupplungsmaul, zur Aufnahme eines Sattelzapfens (82) des Kuppelgegenelements (81) aufweist und/oder dass der mindestens eine Bewegungsfreiheitsgrad mindestens einen Drehfreiheitsgrad (DX, DY) zur Drehung des Mitnehmers (20) um mindestens eine zu der Mitnahme-Drehachse (M) winkelige, insbesondere rechtwinkelige, Drehachse umfasst oder dadurch gebildet ist.

4. Sensorvorrichtung nach einem der vorhergehenden Ansprüche, **dadurch gekennzeichnet, dass** der Mitnehmer (20) kardanisch an dem Kuppelelement (61) gelagert ist, wobei die Kardanachsen von der Mitnahme-Drehachse (M) verschieden sind, und/oder dass der mindestens eine Bewegungsfreiheitsgrad mindestens einen linearen Bewegungsfreiheitsgrad (LX, LY, LZ) umfasst und/oder dass der Mitnehmer (20) bezüglich des Kuppelelements (61) um mindestens eine Verschiebeachse oder Linearachse verschieblich gelagert ist.

5. Sensorvorrichtung nach einem der vorhergehenden Ansprüche, **dadurch gekennzeichnet, dass** sie, insbesondere die Halteeinrichtung (40), ein Befestigungsmittel, insbesondere ein Schraubmittel und/oder Klemmmittel und/oder eine Formschlusskontur und/oder mindestens einen Schweißbolzen und/oder ein Saugmittel, zur Befestigung an dem Kuppelelement (61) oder bei dem Kuppelelement (61) der Zugfahrzeugkupplung (60) aufweist.

6. Sensorvorrichtung nach einem der vorhergehenden Ansprüche, **dadurch gekennzeichnet, dass** die Halteeinrichtung (40) den Lagerkörper (30) mit mindestens einem zur Bereitstellung oder Aufrechterhaltung der Mitnahmekopplung des Mitnehmers (20) zu dem Kuppelgegenelement (81) geeigneten Bewegungsfreiheitsgrad, der von der Drehbarkeit um die Mitnahme-Drehachse (M) verschieden ist, bezüglich des Kuppelelements (61) lagert, und/oder dass der Lagerkörper (30) fest mit dem Träger (47) verbunden oder an dem Träger (47) mit mindestens einem von der Drehbarkeit um die Mitnahme-Drehachse (M) verschiedenen Bewegungsfreiheitsgrad beweglich gelagert ist.

7. Sensorvorrichtung nach einem der vorhergehenden Ansprüche, **dadurch gekennzeichnet, dass** der Lagerkörper (30) bezüglich des Kuppelelements (61) mittels eines Kugelgelenks gelagert ist, welches bezüglich der Mitnahme-Drehachse (M) an dem Kuppelelement (61) drehfest festgelegt ist, und/oder dass der Lagerkörper (30) bezüglich des Kuppelelements (61) der Zugfahrzeugkupplung (60) mit Ausnahme einer Drehbarkeit um die Mitnahme-Drehachse (M) schwimmend und/oder mit mindestens zwei Bewegungsfreiheitsgraden beweglich gelagert ist.

8. Sensorvorrichtung nach einem der vorhergehenden Ansprüche, **dadurch gekennzeichnet, dass** der Mitnehmer (20) an dem Lagerkörper (30) an mindestens zwei Drehlagern (33, 34), insbesondere Wälzlagern, zwischen denen bezüglich der Mitnahme-Drehachse (M) ein Abstand, insbesondere für den mindestens einen Sensor (11), vorgesehen ist, drehbar gelagert ist und/oder dass der Mitnehmer (20) an einander entgegengesetzten Längsendbereichen des Lagerkörpers (30) bezüglich der Mitnahme-Drehachse (M) drehbar gelagert ist und/oder dass der Mitnehmer (20) an dem Lagerkörper (30) mit mindestens einem Wälzlager gelagert ist und/oder dass der Mitnehmer (20) eine von der Mitnahme-Drehachse (M) durchsetzte Stirnfläche (21) aufweist, die zur, insbesondere reibschlüssigen und/oder formschlüssigen, Mitnahme durch das Kuppelgegenelement (81) ausgestaltet und/oder vorgesehen ist, und/oder dass eine von der Mitnahme-Drehachse (M) durchsetzte Stirnseite des Mitnehmers (20) mindestens einen Ring aufweist oder durch den Ring gebildet ist und/oder eine ringförmige oder teilringförmige Umfangsmitnahmekontur (27) aufweist.

9. Sensorvorrichtung nach einem der vorhergehenden Ansprüche, **dadurch gekennzeichnet, dass** sie Kraftbeaufschlagungsmittel (50) zu einer Kraftbeaufschlagung des Mitnehmers (20) in Richtung des Kuppelgegenelements (81) aufweist und/oder dass sie eine Federanordnung (51) zur Bereitstellung einer den Mitnehmer (20) in Richtung des Kuppelgegenelements (81) beaufschlagenden Federkraft umfasst und/oder sie eine Magnetanordnung mit mindestens einem Magneten (53) zur Bereitstellung einer den Mitnehmer (20) in Richtung des Kuppelgegenelements (81) beaufschlagenden magnetischen Anziehungskraft aufweist.

10. Sensorvorrichtung nach einem der vorhergehenden Ansprüche, **dadurch gekennzeichnet, dass** die Magnetanordnung zur Betätigung oder Erregung des mindestens einen Sensors (11) ausgestaltet und/oder angeordnet ist und/oder dass sie eine Abschirmungseinrichtung zur Abschirmung des mindestens einen Sensors (11) gegenüber magnetischen Einflüssen der Magnetanordnung aufweist.

11. Sensorvorrichtung nach einem der vorhergehenden Ansprüche, **dadurch gekennzeichnet**, der Mitnehmer (20) mindestens einen elastischen Abschnitt (28) zur elastischen Verformung durch das Kuppelgegenelement (81) aufweist und/oder dass an dem Mitnehmer (20) mindestens eine Reibschlussfläche (681) für einen reibschlüssigen Kontakt mit dem Kuppelgegenelement (81) und/oder mindestens eine Formschlusskontur für einen formschlüssigen Eingriff des Kuppelgegenelements (81) und des Mitnehmers (20) angeordnet ist, wobei vorteilhaft vorgesehen ist, dass an der mindestens einen Reibschlussfläche (681) eine Vielzahl von Partikeln (683) zum Kontakt mit dem Kuppelgegenelement (81) angeordnet ist.

12. Sensorvorrichtung nach einem der vorhergehenden Ansprüche, **dadurch gekennzeichnet, dass** der Mitnehmer (20), insbesondere neben einer zur Mitnahmekopplung mit dem Kuppelgegenelement (81) vorgesehenen Kontaktfläche oder Stirnfläche (21), eine Schrägfläche (22A) aufweist, an der das Kuppelgegenelement (81) entlanggleiten und/oder anhand derer das Kuppelgegenelement (81) den Mitnehmer (20) mit mindestens einem von einer Drehung um die Mitnahme-Drehachse (M) verschiedenen Bewegungsfreiheitsgrad betätigen kann, und/oder dass der Mitnehmer (20) mindestens einen Mitnahmering oder ringförmigen Abschnitt aufweist und/oder dass der Mitnehmer (20) einen domartigen oder turmartigen Mitnahmekörper aufweist und/oder dass der Mitnehmer (20) ein Schutzgehäuse (29) für einen den Mitnehmer (20) lagernden Lagerkörper (30) bildet oder aufweist.

13. Sensorvorrichtung nach einem der vorhergehenden Ansprüche, **dadurch gekennzeichnet, dass** sie einen um die Mitnahme-Drehachse (M) drehbar gelagerten Sensor (11) oder Sensorgeber (25) aufweist, der mit dem Mitnehmer (20) drehgekoppelt oder drehverbunden ist, und/oder dass sie eine Ringanordnung (25B) mehrerer um die Mitnahme-Drehachse (M) angeordneter Sensoren oder Sensorgeber (25) aufweist.

14. Sensorvorrichtung nach einem der vorhergehenden Ansprüche, **dadurch gekennzeichnet, dass** der Mitnehmer (620) einen, insbesondere ein Schutzgehäuse für den mindestens einen Sensor bildenden, Mitnehmer-Träger (667) aufweist, an dem ein Mitnahmekörper (660) lösbar befestigt ist, wobei die mindestens eine Reibschlussfläche (681) an dem Mitnahmekörper (660) vorgesehen ist, und/oder dass der Mitnahmekörper (660) eine Aufgleitschräge zum Aufgleiten des Kuppelgegenelements (81) aufweist und/oder den Mitnehmer-Träger (667) ringförmig umgibt und/oder eine Abdeckkappe oder einen Deckel für den Mitnehmer-Träger (667) bildet und/oder quer zur Mitnahme-Drehachse (M) vor den Mitnehmer-Träger (667) vorsteht und/oder dass die Zugfahrzeugkupplung (60) als Sattelkupplung (60A) ausgestaltet ist und das Kuppelelement (61) eine Kupplungsaufnahme (70), insbesondere ein Kupplungsmaul, zur Aufnahme eines Sattelzapfens (82) des Kuppelgegenelements (81) aufweist oder das Kuppelelement (61) eine Kupplungskugel oder einen Kupplungsvorsprung zum Eingriff in eine Kupplungsaufnahme (70) des Kuppelgegenelements (81) aufweist.

15. Zugfahrzeugkupplung (60) mit einer Sensorvorrichtung (10) nach einem der vorhergehenden Ansprüche.

## Claims

1. Sensor device for a towing vehicle coupling (60) or as a component of a towing vehicle coupling (60), in particular a fifth-wheel coupling (60A), with which a trailer vehicle (A), in particular a semi-trailer, can be coupled to a towing vehicle (Z), in particular a truck, wherein the towing vehicle coupling (60) has a coupling element (61) for detachably coupling to a coupling counter element (81), in particular a fifth-wheel king pin (82), wherein the coupling element (61) is/can be secured to the towing vehicle (Z) and the coupling counter element (81) is/can be secured to the trailer vehicle (A), and in the coupled state forming a joint, they can rotate relative to one another about at least one joint rotational axis (GZ), wherein the sensor device (10) has a follower (20), mounted on a bearing body (30) such that it can rotate about a follower rotational axis (M), for detecting a rotation of the coupling counter element (81) relative to the coupling element (61) about the at least one joint rotational axis (GZ), wherein the follower (20) can rotate about the follower rotational axis (M) by rotationally following the coupling counter element (81) in a rotation about the at least one joint rotational axis (GZ), and the sensor device (10) has at least one sensor (11) for detecting a respective rotational position of the follower (20) relative to the bearing body (30) in relation to the follower rotational axis (M), wherein the follower (20) is arranged outside a bearing region (96) of the joint, in which the coupling element (61) and the coupling counter element are engaged with one another in a bearing manner, wherein the at least one sensor (11) is arranged inside the follower (20) and/or the follower (20) forms a protective housing (29) for the at least one sensor (11), and wherein that the follower (20) is mounted such that it moves relative to the coupling element (61) for providing or maintaining a follower coupling to the coupling counter element (81) by at least one degree of freedom of movement, in particular rotational degree of freedom (DX, DY), that is different to the rotatability about the follower rotational axis (M), **characterised in that** it comprises a holding device (40) for holding the bearing body (30) against rotation with respect to the follower rotational axis (M) on the coupling element (61) and the holding device (40) comprises a carrier (47) for the bearing body (30) which is movably supported on the coupling element (61).

2. Sensor device according to claim 1, **characterised in that** the bearing body (30) is or can be arranged on the coupling element (61) of the towing vehicle or is formed by the coupling element (61) and/or **in that** it is designed and/or provided for an arrangement in a receiving space (67) existing at the coupling receptacle (70), in particular below the coupling receptacle (70) or adjacent to a support plate of the towing vehicle coupling (60), in particular a cavity, of the towing vehicle coupling (60).

3. Sensor device according to claim 1 or 2, **characterised in that** it comprises a holding device (40) for holding the follower (20) on an end face of the king pin (82) and/or for attachment to opposite sides of the coupling receptacle (70) and/or **in that** the coupling element (61) has a coupling receptacle (70), in particular a coupling jaw, for receiving a king pin (82) of the coupling counter element (81) and/or **in that** the at least one degree of freedom of movement comprises or is formed by at least one rotational degree of freedom (DX, DY) for rotating the follower (20) about at least one rotational axis at an angle to the carrier rotational axis (M), in particular at right-angles.

4. Sensor device according to any one of the preceding claims, **characterised in that** the follower (20) is gimbal-mounted on the coupling element (61), wherein the cardan axes are different from the follower rotational axis (M) and/or **in that** the at least one degree of freedom of movement comprises at least one linear degree of freedom of movement (LX, LY, LZ) and/or **in that** the follower (20) is mounted such that it can displace with respect to the coupling element (61) about at least one displacement axis or linear axis.

5. Sensor device according to any one of the preceding claims, **characterised in that** it, in particular the holding device (40), comprises a fastening means, in particular a screw means and/or clamping means and/or a form-fitting contour and/or at least one welding stud and/or a suction means, for attachment to the coupling element (61) or on the coupling element (61) of the towing vehicle coupling (60).

6. Sensor device according to any one of the preceding claims, **characterised in that** the holding device (40) supports the bearing body (30) with at least one degree of freedom of movement suitable for providing or maintaining the follower coupling of the follower (20) to the coupling counter element (81), which is different from the rotatability about the follower rotational axis (M), with respect to the coupling element (61) and/or **in that** the bearing body (30) is fixedly connected to the carrier (47) or on the carrier (47) with at least one degree of freedom of movement that is different from the rotatability about the follower rotational axis (M).

7. Sensor device according to any one of the preceding claims, **characterised in that** the bearing body (30) is mounted with respect to the coupling element (61) by means of at least one ball joint, which is fixed against rotation on the coupling element (61) with respect to the follower rotational axis (M) and/or **in that** the bearing body (30) is movably mounted with respect to the coupling element (61) of the towing vehicle coupling (60) with the exception of a rotatability about the follower rotational axis (M) that is floating and/or with at least two degrees of freedom of movement.

8. Sensor device according to any one of the preceding claims, **characterised in that** the follower (20) is rotatably mounted on the bearing body (30) on at least two rotary bearings (33, 34), in particular rolling bearings, between which with respect to the follower rotational axis (M) a distance, in particular for the at least one sensor (11) is provided, and/or that the follower (20) is rotatably mounted on mutually opposite longitudinal end regions of the bearing body (30) with respect to the follower rotational axis (M) and/or **in that** the follower (20) is mounted on the bearing body (30) with at least one rolling bearing and/or **in that** the follower (20) comprises an end face (21) penetrated by the follower rotational axis (M), which is designed and/or provided for, in particular frictional and/or positive, following by the coupling counter element (81) and/or **in that** an end face of the follower (20) penetrated by the follower rotational axis (M) comprises or is formed by at least one ring or is formed by the ring and/or an annular or partially annular circumferential follower contour (27).

9. Sensor device according to any one of the preceding claims, **characterised in that** it comprises force-applying means (50) for a force application of the follower (20) in the direction of the coupling counter element (81) and/or **in that** it comprises a spring arrangement (51) for providing a spring force impinging on the follower (20) in the direction of the coupling counter element (81) and/or **in that** it has a magnet arrangement with at least one magnet (53) for providing a magnetic attraction force impinging on the follower (20) in the direction of the coupling counter element (81).

10. Sensor device according to any one of the preceding claims, **characterised in that** the magnet arrangement is configured and/or arranged for actuating or exciting the at least one sensor (11) and/or that it has a screening device for screening the at least one sensor (11) against magnetic influences of the magnet arrangement.

11. Sensor device according to any one of the preceding claims, **characterised in that** the follower (20) has at least one elastic section (28) for elastic deformation by the coupling counter element (81) and/or **in that** at least one frictional engagement surface (681) for a frictional contact with the coupling counter element (81) and/or at least one positive locking contour for a positive engagement of the coupling counter element (81) and the follower (20) is arranged on the follower (20), wherein it is advantageously provided that a plurality of particles (683) for contact with the coupling counter element (81) are arranged on the at least one frictional engagement surface (681).

12. Sensor device according to any one of the preceding claims, **characterised in that** the follower (20), in particular in addition to a contact surface or end face (21) provided for follower coupling with the coupling counter element (81), has an inclined surface (22A), along which the coupling counter element (81) can slide and/or by means of which the coupling counter element (81) can actuate the follower (20) with at least one degree of freedom of movement different from a rotation about the follower rotational axis (M) and/or **in that** the follower (20) has at least one follower ring or annular section and/or **in that** the follower (20) has a dome-shaped or tower-like follower body and/or **in that** the follower (20) forms or comprises a protective housing (29) for a bearing body (30) supporting the follower (20).

13. Sensor device according to any one of the preceding claims, **characterised in that** it has a sensor (11) or sensor transmitter (25) mounted so that it can rotate about the follower rotational axis (M), which is rotationally coupled or rotationally connected to the follower (20) and/or **in that** it comprises a ring arrangement (25B) of a plurality of sensors or sensor transmitters (25) arranged about the follower rotational axis (M).

14. Sensor device according to any one of the preceding claims, **characterised in that** the follower (620) has a follower carrier (667), in particular forming a protective housing for the at least one sensor, to which the carrier body (660) is detachably fastened, wherein the at least one frictional engagement surface (681) is provided on the follower body (660) and/or **in that** the follower body (660) has a slide-on slope for sliding on the coupling counter element (81) and/or circularly surrounds the follower carrier (667) and/or forms a cap or lid for the follower carrier (667) and/or protrudes transversely to the follower rotational axis (M) from the follower carrier (667) and/or **in that** the towing vehicle coupling (60) is designed as a fifth wheel (60A) and the coupling element (61) has a coupling receptacle (70), in particular a coupling jaw, for receiving a king pin (82) of the coupling counter element (81) or that the coupling element (61) has a coupling ball or a coupling projection for engagement in a coupling receptacle (70) of the coupling counter element (81).

15. Towing vehicle coupling (60) with a sensor device (10) according to any one of the preceding claims.

## Revendications

1. Dispositif de capteur pour un attelage de véhicule de traction (60) ou en tant que partie intégrante d'un attelage de véhicule de traction (60), en particulier d'une sellette d'attelage (60A), avec laquelle un véhicule remorqué (A), en particulier un semi-remorque, peut être accouplé à un véhicule de traction (Z), en particulier à un poids lourd, dans lequel l'attelage de véhicule de traction (60) présente un élément de couplage (61) destiné à atteler de manière amovible un contre-élément de couplage (81), en particulier un pivot d'attelage (82), dans lequel l'élément de couplage (61) est fixé ou peut être fixé sur le véhicule de traction (Z) et le contre-élément de couplage (81) est fixé ou peut être fixé sur le véhicule remorqué (A) et l'un et l'autre peuvent être tournés l'un par rapport à l'autre autour d'au moins un axe de rotation à articulation (GZ) formant une articulation dans l'état attelé l'un à l'autre, dans lequel le dispositif de capteur (10) présente un entraîneur (20) monté de manière à pouvoir tourner autour d'un axe de rotation d'entraînement (M) sur un corps de montage (30) pour détecter une rotation du contre-élément de couplage (81) par rapport à l'élément de couplage (61) autour de l'au moins un axe de rotation à articulation (GZ), dans lequel l'entraîneur (20) peut être entraîné en rotation autour de l'axe de rotation d'entraînement (M) par le contre-élément de couplage (81) lors d'une rotation autour de l'au moins un axe de rotation à articulation (GZ) et le dispositif de capteur (10) présente au moins un capteur (11) destiné à détecter une position de rotation respective de l'entraîneur (20) par rapport au corps de montage (30) par rapport à l'axe de rotation d'entraînement (M), dans lequel l'entraîneur (20) est disposé à l'extérieur d'une zone de montage (96) de l'articulation, dans laquelle l'élément de couplage (61) et le contre-élément de couplage sont en prise de montage l'un avec l'autre, dans lequel l'au moins un capteur (11) est disposé dans un espace intérieur de l'entraîneur (20) et/ou l'entraîneur (20) forme un boîtier protecteur (29) pour l'au moins un capteur (11), et dans lequel l'entraîneur (20) est monté de manière mobile d'au moins un degré de liberté de mouvement différent de la possibilité de rotation autour de l'axe de rotation d'entraînement (M), en particulier d'un degré de liberté de rotation (DX, DY), par rapport à l'élément de couplage (61) pour fournir ou maintenir un couplage d'entraînement par rapport au contre-élément de couplage (81), **caractérisé en ce qu'**il présente un système de maintien (40) destiné à un maintien solidaire en rotation par rapport à l'axe de rotation d'entraînement (M) du corps de montage (30) sur l'élément de couplage (61), et le système de maintien (40) comprend un élément de support (47) pour le corps de montage (30), qui est monté de manière mobile sur l'élément de couplage (61) ou par rapport à l'élément de couplage (61).

2. Dispositif de capteur selon la revendication 1, **caractérisé en ce que** le corps de montage (30) est disposé ou peut être disposé sur l'élément de couplage (61) du véhicule de traction ou est formé par l'élément de couplage (61), et/ou qu'il est configuré et/ou prévu pour être agencé dans un espace de réception (67), présent pour le logement de couplage (70), en particulier sous le logement de couplage (70) ou prévu à côté d'une plaque d'appui de l'attelage de véhicule de traction (60), en particulier dans une cavité, de l'attelage de véhicule de traction (60).

3. Dispositif de capteur selon la revendication 1 ou 2, **caractérisé en ce qu'**il présente un système de maintien (40) destiné à maintenir l'entraîneur (20) sur un côté frontal du pivot d'attelage (82) et/ou destiné à être fixé sur des côtés opposés les uns aux autres du logement d'attelage (70), et/ou que l'élément de couplage (61) présente un logement d'attelage (70), en particulier une mâchoire d'attelage, destiné à loger un pivot d'attelage (82) du contre-élément de couplage (81), et/ou que l'au moins un degré de liberté de mouvement comprend un degré de liberté de rotation (DX, DY), destiné à faire tourner l'entraîneur (20) autour d'au moins un axe de rotation formant un angle, en particulier un angle droit, par rapport à l'axe de rotation d'entraînement (M) ou est formé par celui-ci.

4. Dispositif de capteur selon l'une quelconque des revendications précédentes, **caractérisé en ce que** l'entraîneur (20) est monté à la Cardan sur l'élément de couplage (61), dans lequel les axes à la Cardan sont différents de l'axe de rotation d'entraînement (M), et/ou que l'au moins un degré de liberté de mouvement comprend au moins un degré de liberté de mouvement linéaire (LX, LY, LZ), et/ou que l'entraîneur (20) est monté de manière à pouvoir coulisser autour d'au moins un axe de coulissement ou d'un axe linéaire par rapport à l'élément de couplage (61).

5. Dispositif de capteur selon l'une quelconque des revendications précédentes, **caractérisé en ce qu'**il, en particulier le système de maintien (40), présente un moyen de fixation, en particulier un moyen de vissage et/ou un moyen de serrage et/ou un contour à complémentarité de forme et/ou un boulon de soudage et/ou un moyen d'aspiration, destiné à être fixé sur l'élément de couplage (61) ou à proximité de l'élément de couplage (61) de l'attelage de véhicule de traction (60).

6. Dispositif de capteur selon l'une quelconque des revendications précédentes, **caractérisé en ce que** le système de maintien (40) supporte le corps de montage (30) avec au moins un degré de liberté de mouvement adapté pour fournir ou maintenir l'attelage d'entraînement de l'entraîneur (20) par rapport au contre-élément de couplage (81), qui est différent de la possibilité de rotation autour de l'axe de rotation d'entraînement (M), par rapport à l'élément de couplage (61), et/ou que le corps de montage (30) est relié de manière solidaire à l'élément de support (47) ou est monté sur l'élément de support (47) de manière mobile avec au moins un degré de liberté de mouvement différent de la possibilité de rotation autour de l'axe de rotation d'entraînement (M).

7. Dispositif de capteur selon l'une quelconque des revendications précédentes, **caractérisé en ce que** le corps de montage (30) est monté par rapport à l'élément de couplage (61) au moyen d'une articulation sphérique, laquelle est immobilisée de manière solidaire en rotation sur l'élément de couplage (61) par rapport à l'axe de rotation d'entraînement (M), et/ou que le corps de montage (30) est monté de manière flottante à l'exception d'une possibilité de rotation autour de l'axe de rotation d'entraînement (M) et/ou de manière mobile avec au moins deux degrés de liberté de mouvement par rapport à l'élément de couplage (61) de l'attelage de véhicule de traction (60).

8. Dispositif de capteur selon l'une quelconque des revendications précédentes, **caractérisé en ce que** l'entraîneur (20) est monté de manière à pouvoir tourner sur le corps de montage (30) sur au moins deux paliers de montage rotatifs (33, 34), en particulier des paliers à roulement, entre lesquels une distance, en particulier pour l'au moins un capteur (11), est prévue par rapport à l'axe de rotation d'entraînement (M), et/ou que l'entraîneur (20) est monté de manière à pouvoir tourner par rapport à l'axe de rotation d'entraînement (M) sur des zones d'extrémité longitudinales opposées les unes aux autres du corps de montage (30) par rapport à l'axe de rotation d'entraînement (M), et/ou que l'entraîneur (20) est monté sur le corps de montage (30) avec au moins un palier de roulement, et/ou que l'entraîneur (20) présente une face frontale (21) traversée par l'axe de rotation d'entraînement (M), qui est configurée et/ou prévue pour l'entraînement, en particulier par friction et/ou à complémentarité de forme, par le contre-élément de couplage (81), et/ou qu'un côté frontal traversé par l'axe de rotation d'entraînement (M) de l'entraîneur (20) présente au moins une bague, ou est formé par la bague et/ou présente un contour d'entraînement périphérique (27) annulaire ou partiellement annulaire.

9. Dispositif de capteur selon l'une quelconque des revendications précédentes, **caractérisé en ce qu'**il présente des moyens d'exposition à une force (50) pour soumettre l'entraîneur (20) à l'action d'une force en direction du contre-élément de couplage (81), et/ou qu'il comprend un ensemble formant ressort (51) destiné à fournir une force de ressort soumettant l'entraîneur (20) à l'action d'une force en direction du contre-élément de couplage (81), et/ou il présente un ensemble magnétique avec au moins un aimant (53) destiné à fournir une force d'attraction magnétique soumettant l'entraîneur (20) à une action en direction du contre-élément de couplage (81).

10. Dispositif de capteur selon l'une quelconque des revendications précédentes, **caractérisé en ce que** l'ensemble magnétique est configuré et/ou est disposé pour actionner ou exciter l'au moins un capteur (11), et/ou qu'il présente un système de protection destiné à protéger l'au moins un capteur (11) par rapport à des influences magnétiques de l'ensemble magnétique.

11. Dispositif de capteur selon l'une quelconque des revendications précédentes, **caractérisé en ce que** l'entraîneur (20) présente au moins une section élastique (28) pour la déformation élastique par le contre-élément de couplage (81), et/ou qu'au moins une surface à friction (681) pour un contact par friction avec le contre-élément de couplage (81) et/ou au moins un contour à complémentarité de forme pour une prise par complémentarité de forme du contre-élément de couplage (81) et de l'entraîneur (20) sont disposés sur l'entraîneur (20), dans lequel il est prévu de manière avantageuse qu'une pluralité de particules (683) destinées à venir en contact avec le contre-élément de couplage (81) est disposée sur l'au moins une surface à friction (681).

12. Dispositif de capteur selon l'une quelconque des revendications précédentes, **caractérisé en ce que** l'entraîneur (20) présente une surface oblique (22A), en particulier à côté d'une surface de contact ou d'une surface frontale (21) prévues pour le couplage par entraînement au contre-élément de couplage (81), sur laquelle le contre-élément de couplage (81) peut glisser longitudinalement et/ou à l'aide de laquelle le contre-élément de couplage (81) peut actionner l'entraîneur (20) avec au moins un degré de liberté de mouvement différent d'une rotation autour de l'axe de rotation d'entraînement (M), et/ou que l'entraîneur (20) présente au moins une bague d'entraînement ou une section annulaire, et/ou que l'entraîneur (20) présente un corps d'entraînement de type dôme ou de type tour, et/ou que l'entraîneur (20) forme ou présente un boîtier de protection (29) pour un corps de montage (30) supportant l'entraîneur (20).

13. Dispositif de capteur selon l'une quelconque des revendications précédentes, **caractérisé en ce qu'**il présente un capteur (11) ou une sonde de capteur (25) monté ou montée de manière à pouvoir tourner autour de l'axe de rotation d'entraînement (M), qui est couplé(e) en rotation ou relié(e) en rotation à l'entraîneur (20), et/ou qu'il présente un ensemble annulaire (25B) de plusieurs capteurs ou sondes de capteur (25) disposés autour de l'axe de rotation d'entraînement (M).

14. Dispositif de capteur selon l'une quelconque des revendications précédentes, **caractérisé en ce que** l'entraîneur (620) présente un élément de support d'entraîneur (667) formant en particulier un boîtier de protection pour l'au moins un capteur, sur lequel un corps d'entraînement (660) est fixé de manière amovible, dans lequel l'au moins une surface à friction (681) est prévue sur le corps d'entraînement (660), et/ou que le corps d'entraînement (660) présente une surface de glissement pour faire glisser le contre-élément de couplage (81) et/ou entoure de manière annulaire l'élément de support d'entraîneur (667) et/ou forme un capot de recouvrement ou un couvercle pour l'élément de support d'entraîneur (667) et/ou fait saillie devant l'élément de support d'entraîneur (667) de manière transversale par rapport à l'axe de rotation d'entraînement (M), et/ou que l'attelage de véhicule de traction (60) est configuré en tant que sellette d'attelage de (60A) et l'élément de couplage (61) présente un logement d'attelage (70), en particulier une mâchoire d'attelage, destiné à loger un pivot d'attelage (82) du contre-élément de couplage (81), ou l'élément de couplage (61) présente une boule d'attelage ou une partie faisant saillie d'attelage destinée à venir en prise avec un logement d'attelage (70) du contre-élément de couplage (81).

15. Attelage de véhicule de traction (60) avec un dispositif de capteur (10) selon l'une quelconque des revendications précédentes.
